# EUROPÄISCHE PATENTSCHRIFT

(11) **EP 3 002 122 B1**
(45) Veröffentlichungstag und Bekanntmachung des Hinweises auf die Patenterteilung: **29.08.2018**
(21) Anmeldenummer: 15174892.8
(22) Anmeldetag: 01.07.2015
(51) Int. Cl.: B32B 17/06, B32B 17/10, E06B 5/16

(54) **VORRICHTUNG UND VERFAHREN ZUR HERSTELLUNG VON BRANDSCHUTZGLÄSERN**
DEVICE AND METHOD FOR PRODUCING FIRE-PROOF GLASSES
DISPOSITIF ET PROCEDE DE FABRICATION DE VITRAGES COUPE-FEU

(30) Priorität: 30.09.2014 DE 102014114241
(43) Veröffentlichungstag der Anmeldung: 06.04.2016
(73) Patentinhaber: Hörmann KG Eckelhausen, 66625 Nohfelden / Eckelhausen (DE)
(72) Erfinder: BAUS, Thomas, 66620 Schwarzenbach (DE); BEIER, Peter, 66625 Nohfelden (DE)
(74) Vertreter: Kastel, Stefan

(56) Entgegenhaltungen:
- EP-A1- 0 259 529
- EP-A1- 0 279 634
- EP-A1- 2 955 312
- DE-A1- 3 445 266
- US-A- 4 756 938
- US-A1- 2006 240 731

## Beschreibung

Die Erfindung betrifft eine Vorrichtung und ein Verfahren zur Herstellung von Brandschutzgläsern.

Zum Stand der Technik zu entsprechenden Brandschutzgläsern und deren Herstellungsverfahren wird auf folgende Dokumente hingewiesen: DE29917402U1, DE102008009484A1, WO2006133896A1, WO002012085123A1, DE3125597A1, WO2009007452A1, DE3637064C1, DE4435841A1, EP1147981B1, EP1820931 A1, DE3530968A1, DE3125597C2, DE102009044796A1, DE202006002749U1, DE4430710C1, DE69835258T2, WO2009007452A1, DE69619737T2, DE20303253U1, DE19731416C1, DE69632314T2.pdf, WO2010091525A1, DE10055151A1, EP0638526B1, DE10147401A1, EP1241144A1, DE19729336A1, WO1994016187A1, DE202004001010U1, DE202010008731U1, EP1893545A1, DE19824965A1, DE202008007339U1, EP0970930B1, DE202012012285U1, DE10237395B4, EP0951388B1, EP1930151B1, DE102005018842A1, DE4407892A1, DE19916506C1, DE60004041T2, EP1179113B1, DE202010008731U1, DE000060026690T2, EP1706263B1, DE3915687A1, DE19827867C1, DE202005001617U1, DE19922507C2, DE102009000377A1, DE19543148C2, EP0721047A1, DE102012200799A1 und EP0753639B1.

EP 0 279 634 A1 offenbart ein feuerresistentes Verglasungsprodukt mit wenigstens zwei Scheiben Verglasungsmaterial. Die Scheiben sind mittels einer Zwischenschicht aus einem klebendem Bindematerial und einem Metalldrahtnetz verbunden, das in das Bindematerial eingebettet ist.

DE 34 45 266 A1 offenbart ein Verfahren zur Herstellung eines Verbundglases mit wenigstens zwei Parallel-Glasscheiben, die in ihren Randbereichen mittels eines Stranges aus Dichtmasse auf Abstand gehalten werden und wobei durch Öffnungen im Abstandhalter das härtbare, flüssige Kunstharz eingeführt sowie die verdrängte Luft ausgelassen wird und wobei die Anordnung zur Aushärtung in praktisch horizontaler Lage gehalten wird. Zwecks Verbesserung und Rationalisierung des Einfüllvorgangs für das Gießharz und des Entlüftungsvorgangs des Scheibenzwischenraumes werden als Einfüll- bzw. Entlüftungsorgan Hohlprofile mit einem in der Dichtung verbleibenden Ende in die Dichtung eingelegt, nach der Einfüllung des Harzes in gegen die Horizontale geneigter Stellung die Scheibenanordnung in die Horizontale und das Harz zur Aushärtung gebracht und nach der Härtung die über die Scheibenkanten überstehenden Profilteile abgetrennt.

US 4 756 938 A und EP 0 259 529 A1 offenbaren ein Verfahren zum Herstellen einer laminierten oder harzgebundenen Verglasungseinheit, bei dem ein exotherm aushärtendes Harzmaterial zwischen einem Paar beabstandeten Verglasungspanelen eingeführt wird, wobei eines der Verglasungspanele ein mit Bleirahmen versehenes, gefärbtes oder dekoratives Verglasungspanel ist.

US 2006 / 0 240 731 A1 offenbart eine feuerresistente Zusammensetzung zur Verwendung in einem feuerresistenten Verglasungsprodukt, wobei die Zusammensetzung Epoxidharz, saures Anhydrid, phosporbasiertes Brandschutzmittel, Haftvermittler und reaktiven Weichmacher enthält.

Wie aus dem vorerwähnten Stand der Technik bekannt, sind Brandschutzgläser in der Regel aus wenigstens einer ersten Scheibe, einer zweiten Scheibe und einem Brandschutzmaterial aufgebaut. Meist ist eine Versiegelung oder ein Rahmen zum Verbinden der Scheiben und zum Abdichten des das Brandschutzmaterial enthaltenden Raumes vorgesehen. Zum Beispiel ist ein Zwischenraum zwischen einer ersten und einer zweiten Scheibe mit einem Brandschutzmaterial gefüllt, wie es in der DE 35 30 968 A1 offenbart ist.

Die Erfindung hat sich zur Aufgabe gestellt, ein Verfahren und eine Vorrichtung zur Herstellung von Brandschutzgläsern hinsichtlich Kosten, einfacher Handhabung, Prozesszeit und eingesetzter Materialien zu verbessern.

Zum Lösen dieser Aufgabe schlägt die Erfindung eine Vorrichtung und ein Verfahren gemäß den unabhängigen Ansprüchen vor.

Vorteilhafte Ausgestaltungen der Erfindung sind Gegenstand der Unteransprüche.

Gemäß einem ersten Aspekt schafft die Erfindung eine Vorrichtung zur Serienherstellung von Brandschutzgläsern, die jeweils eine erste Scheibe, eine mit der ersten Scheibe mit Abstand verbundene zweite Scheibe und polymerisiertes und/oder gelartiges Brandschutzmaterial in einem Zwischenraum zwischen der ersten und der zweiten Scheibe aufweisen, wobei die Vorrichtung umfasst:
eine Rohling-Anlieferungseinheit zum Bereitstellen eines Rohlings, der die erste Scheibe und die zweite Scheibe aufweist, die mittels Befestigungsmitteln aneinander derart verbunden sind, dass ein Zwischenraum zum Befüllen mit Brandschutzmaterial vorgesehen ist,
eine Befülleinheit zum Befüllen des Rohlings mit einer fließfähigen Brandschutzmaterialzusammensetzung, die zur Bildung des Brandschutzmaterials durch im Zwischenraum erfolgende Polymerisation und/oder Gelbildung fähig ist, eine Kippeinheit zum Kippen des mit der Brandschutzmaterialzusammensetzung befüllten Rohlings in eine horizontale Lage und
ein Ruhelager zum Aufnehmen einer Mehrzahl der horizontal ausgerichteten befüllten Rohlinge zwecks Durchführung der Polymerisation bzw. einer Gelbildung, um aus der Brandschutzmaterialzusammensetzung das polymerisierte bzw. gelartige Brandschutzmaterial zu bilden,
eine Transporteinheit zum Transportieren des befüllten Rohlings in das Ruhelager und/oder zum Abtransport der mit dem Brandschutzmaterial versehenen Brandschutzgläsern aus dem Ruhelager zur Weiterverarbeitung. Ferner umfasst die Vorrichtung wenigstens eine erste Druckplatte und wenigstens eine zweite Druckplatte und wenigstens eine Plattenbefestigungseinrichtung, wobei die Vorrichtung dazu ausgebildet ist, bei der Anlieferung durch die Anlieferungseinheit pro Rohling jeweils eine erste Druckplatte auf die erste Scheibe aufzusetzen und eine zweite Druckplatte auf die zweite Scheibe aufzusetzen und die Druckplatten mit dem Rohling dazwischen durch eine Plattenbefestigungseinrichtung relativ zueinander zu fixieren, um den Rohling und das daraus gebildete Brandschutzglas zumindest beim Befüll- und Kippvorgang handzuhaben.

Die Vorrichtung kann eine Rohlingherstelleinheit enthalten, die dazu ausgebildet ist, Rohlinge durch Verbinden der ersten und der zweiten Scheibe mit Zwischenraum dazwischen und durch Abdichten des Zwischenraums am gesamten Umfang des Rohlings mit Ausnahme einer Befüllöffnung und einer Belüftungsöffnung dazwischen, herzustellen.

Die Rohlinge können z.B. woanders hergestellt werden und zur Befüllung antransportiert werden. Es ist auch denkbar, die Rohlinge zur Anlieferung in einer Vorstufe der Vorrichtung herzustellen. Demnach kann die Rohlingherstelleinheit am gleichen Ort wie die übrigen Einheiten der Vorrichtung vorgesehen sein oder an einer gesonderten anderen Herstellstätte vorgesehen sein.

Es ist bevorzugt, dass die Rohlingherstelleinheit so ausgebildet ist, dass der Rohling mit der durch einen Befüllstutzen gebildeten Befüllöffnung an einem ersten Eckbereich des Umfangs und der durch einen Belüftungsstutzen gebildeten Belüftungsöffnung an einem dem ersten Eckbereich diagonal gegenüberliegenden zweiten Eckbereich, herzustellen ist.

Es ist bevorzugt, dass die Befülleinheit dazu ausgebildet ist, den Rohling in einer Befülllage aufzunehmen, in der der Rohling mit nach schräg unten gerichteter Befüllöffnung zur Befüllung ausgerichtet ist.

Es ist bevorzugt, dass die Befülleinheit zum Befüllen des Rohlings mittels eines flexiblen, in die Befüllöffnung einzuführenden Schlauch ausgebildet ist, der nach Ende der Befüllung mittels einer Klemme zum Verschließen des Zwischenraums abklemmbar ist.

Es ist bevorzugt, dass die Transporteinheit dazu ausgebildet ist, eine durch die erste und zweite Druckplatte und die Plattenbefestigungseinrichtung gebildete Rohlingsaufnahmeeinheit zur Handhabung und zum Transport des Rohlings durch die Befüll- und Kippeinheit hindurch zu transportieren und danach wieder zur Anlieferungseinheit zu bewegen, um einen neuen Rohling aufzunehmen.

Es ist bevorzugt, dass das Ruhelager mehrere Fächer zum Aufnehmen der befüllten Rohlinge aufweist, wobei die Transporteinheit dazu ausgebildet ist, einen befüllten Rohling automatisch in ein freies Fach einzulagern und zeitgesteuert nach Ablauf einer vorgegebenen Ruhezeit wieder aus dem Fach zur Weiterverarbeitung zu entnehmen.

Besonders bevorzugt ist das Ruhelager als automatisches Lagerregal mit mehreren horizontalen Fächern ausgebildet.

Gemäß einem weiteren Aspekt schafft die Erfindung ein Verfahren zur Serienherstellung von Brandschutzgläsern, die jeweils eine erste Scheibe, eine mit der ersten Scheibe mit Abstand verbundene zweite Scheibe und polymerisiertes und/oder gelartiges Brandschutzmaterial in einem Zwischenraum zwischen der ersten und der zweiten Scheibe aufweisen, umfassend die Schritte:
a) Bereitstellen eines Rohlings, der die erste Scheibe, die daran mit Abstand befestigte zweite Scheibe und eine Abdichtung des zwischen den Scheiben gebildeten Zwischenraums derart aufweist, dass ein Befüllöffnung und eine Entlüftungsöffnung frei gelassen ist, wobei der Rohling zwischen zwei Druckplatten aufgenommen wird und die Druckplatten zum Einspannen des Rohlings und zum Handhaben des Rohlings relativ festgelegt werden, wobei der zwischen den zwei Druckplatten eingespannte Rohling zumindest zum Durchführen wenigstens eines, mehrerer oder aller der Schritte b), c), d) oder e) gehandhabt wird,
b) Befüllen des Zwischenraums mit einer Brandschutzzusammensetzung, die dazu ausgebildet ist, durch Polymerisation und/oder Gelbildung innerhalb des Zwischenraums das Brandschutzmaterial zu bilden, wobei sich der Rohling in einer Befülllage befindet,
c) Kippen des befüllten Rohlings in eine horizontale Lage,
d) Einlagern des befüllten horizontal ausgerichteten Rohlings in ein Ruhelager zum Durchführen der Polymerisation und/oder der Gelbildung, um so das Brandschutzglas zu bilden
e) Auslagern des Brandschutzglases zur Weiterverarbeitung.

Es ist bevorzugt, dass Schritt a) umfasst:
a1) Befestigen der ersten Scheibe unter Verwendung von Abstandshaltern an der zweiten Scheibe.

Es ist bevorzugt, dass Schritt a) umfasst:
a2) Abdichten eines Umfangs der aneinander befestigten ersten Scheibe und zweiten Scheibe, um den Zwischenraum abzudichten, vorzugsweise mit Ausnahme einer Befüllöffnung und/oder einer Entlüftungsöffnung.

Es ist bevorzugt, dass Schritt a) umfasst:
a3) Versehen eines Abstandshalters in einem ersten Eckbereich des Umfangs des Rohlings mit einer Befülltülle.

Es ist bevorzugt, dass Schritt a) umfasst:
a4) Versehen eines Abstandshalters in einem zweiten Eckbereich des Umfangs des Rohlings mit einer Entlüftungstülle.

Es ist bevorzugt, dass Schritt a) umfasst:
a5) Vorsehen wenigstens eines verschließbaren Befüll- oder Entlüftungsventils.

Es ist bevorzugt, dass Schritt a) umfasst:
a6) Vorsehen der Befüllöffnung und der Entlüftungsöffnung an diametral gegenüberliegenden Eckbereichen.

Es ist bevorzugt, dass Schritt a) umfasst:
a7) Verwenden von ESG-Scheiben als erste und/oder zweite Scheibe.

Es ist bevorzugt, dass Schritt a) umfasst:
a8) Verwenden eines C-Profils als Abstandshalter.

Es ist bevorzugt, dass Schritt a) umfasst:
a9) Anliefern des Rohlings in einer Transportstellung, in der zwei gegenüberliegende Kanten horizontal ausgerichtet und die beiden verbleibenden Kanten schräg und vertikal ausgerichtet sind.

Es ist bevorzugt, dass das Verfahren und insbesondere Schritt a) umfasst:
a12) Spannen des Rohlings in einer Rohlingaufnahmeeinheit zur Aufrechterhaltung der Planparallelität während der Schritte a) bis c).

Es ist bevorzugt, dass Schritt b) umfasst:
b1) Ausrichten des Rohlings in eine Befülllage mit der Befüllöffnung an der tiefsten Stelle und der Entlüftungsöffnung an der höchsten Stelle

Es ist bevorzugt, dass Schritt b) umfasst:
b2) Einfüllen einer zur Polymerisation und/oder Gelbildung zum Bilden eines Brandschutzmaterials fähigen fließfähigen Brandschutzmaterialzusammensetzung.

Es ist bevorzugt, dass Schritt b) umfasst:
b3) Entlüften des Zwischenraums durch die Entlüftungsöffnung beim Einfüllen der Brandschutzmaterialzusammensetzung.

Es ist bevorzugt, dass Schritt b) umfasst:
b4) Verschließen der Einfüllöffnung.

Es ist bevorzugt, dass Schritt b) umfasst:
b5) Verschließen der Entlüftungsöffnung.
b6) Ausrichten des befüllten Rohlings in eine Transportstellung, in der zwei gegenüberliegende Kanten horizontal ausgerichtet und die beiden verbleibenden Kanten schräg und vertikal ausgerichtet sind.

Es ist bevorzugt, dass Schritt b) umfasst:
b7) Einfüllen der Brandschutzmaterialzusammensetzung durch einen in die Einfüllöffnung eingeführten flexiblen Schlauch.

Es ist bevorzugt, dass Schritt b) umfasst:
b8) Entlüften durch einen in die Entlüftungsöffnung eingeführten flexiblen Schlauch.

Es ist bevorzugt, dass Schritt b) umfasst:
b9) Abklemmen des Schlauchs von Schritt b7) und/oder b8) zwecks Verschließen der Befüllöffnung bzw. der Entlüftungsöffnung.

Es ist bevorzugt, dass das Verfahren, insbesondere Schritt c), umfasst:
c1) Entspannen des befüllten Rohlings durch Lösen der ersten und der zweiten Druckplatte.

Es ist bevorzugt, dass Schritt d) umfasst:
d1) Einlagern des befüllten Rohlings in ein horizontales Fach eines automatischen Lagersystems.

Es ist bevorzugt, dass Schritt e) umfasst:
e1) Erfassen der Ruhezeit für jeden Rohling und automatisches Auslagern des Rohlings nach einer vorgegebenen Ruhezeit zur Weiterverarbeitung.

Es ist bevorzugt, dass Schritt e) umfasst:
e2) Entfernen einer Befüllungstülle und/oder einer Entlüftungstülle.

Es ist bevorzugt, dass Schritt e) umfasst:
e3) Versiegeln und/oder Abdichten der Befüllöffnung und/oder der Entlüftungsöffnung.

Es ist bevorzugt, dass Schritt e) umfasst:
e4) Weitertransport des fertig gestellten Brandschutzglases zur Herstellung
   e4.1) einer Brandschutzfestverglasung oder
   e4.2) einer verglasten Brandschutztür.

Es ist bevorzugt, dass das Verfahren den weiteren Schritt umfasst:
f) Einspannen der angelieferten Rohlinge zwischen eine erste und eine zweite Druckplatte und relatives Fixieren oder Verspannen der Druckplatten und Durchführen eines, mehrerer oder aller der Schritte b), c), d) und e) mit der so gebildeten Einheit aus Druckplatten und Rohling dazwischen.

Es ist bevorzugt, dass das Verfahren den weiteren Schritt umfasst:
g) Entfernen der Druckplatten von dem Rohling nach einem der Schritte b), c oder e) und Rücktransport der Druckplatten zu einer Anlieferungsstelle zwecks Aufnahme eines neuen Rohlings.

Ein Ausführungsbeispiel der Erfindung wird nachfolgend anhand der beigefügten Zeichnung näher erläutert. Darin zeigt:
- Fig. 1: einen Querschnitt durch eine erste Ausführungsform eines Brandschutzglases, welches durch Befüllen eines Rohlings mit einer Brandschutzmaterialzusammensetzung und anschließender Polymerisation bzw. Gelbildung herstellbar ist;
- Fig. 2: eine zweite Ausführungsform des Brandschutzglases;
- Fig. 3: eine dritte Ausführungsform des Brandschutzglases;
- Fig. 4a, 4b: schematische Darstellungen einer nicht von der Erfindung erfassten, bisher üblichen Vorrichtung zur Herstellung vergleichbarer Brandschutzgläser;
- Fig. 5: eine stark schematisierte Darstellung, teils im Schnitt, eines mit der Brandschutzmaterialzusammensetzung zu befüllenden Rohlings;
- Fig. 6a-6d: schematische Darstellungen eines in einer Befülleinheit, die gleichzeitig als Kippeinheit ausgebildet ist, durchzuführenden Befüllvorgangs zum Befüllen des Rohlings von Fig. 5 mit der Brandschutzmaterialzusammensetzung;
- Fig. 7: eine Übersichtsdarstellung der einzelnen Schritte des Verfahrens zur Serienherstellung der Brandschutzgläser, wie sie in den Fig. 1 bis 3 gezeigt sind;
- Fig. 8: die Unterschritte eines Befüllschritts des in Fig. 7 in Übersicht darstellten Verfahrens;
- Fig. 9: ein Diagramm zur Darstellung der Unterschritte eines Kipp-Schritts von Fig. 7;
- Fig. 10: ein Diagramm der Schritte und Unterschritte eines Einlagerns der befüllten Scheibe in ein Ruhelager, eines Polymerisations- bzw. Gelbildungs-Schrittes, eines Auslagerungsschrittes und eines Transportschrittes der in Fig. 7 in Übersicht dargestellten Ausführungsform des Verfahrens;
- Fig. 11: eine schematische Draufsicht auf eine Ausführungsform einer Vorrichtung zur Serienherstellung der Brandschutzgläser mit zwei Fertigungsstraßen;
- Fig. 12: eine vergrößerte Ansicht einer der Fertigungsstraßen der Vorrichtung zur Serienherstellung von Brandschutzgläsern von Fig. 11; und
- Fig. 13: eine schematische Darstellung einer möglichen Ausführungsform der Füll-Kippeinheit.

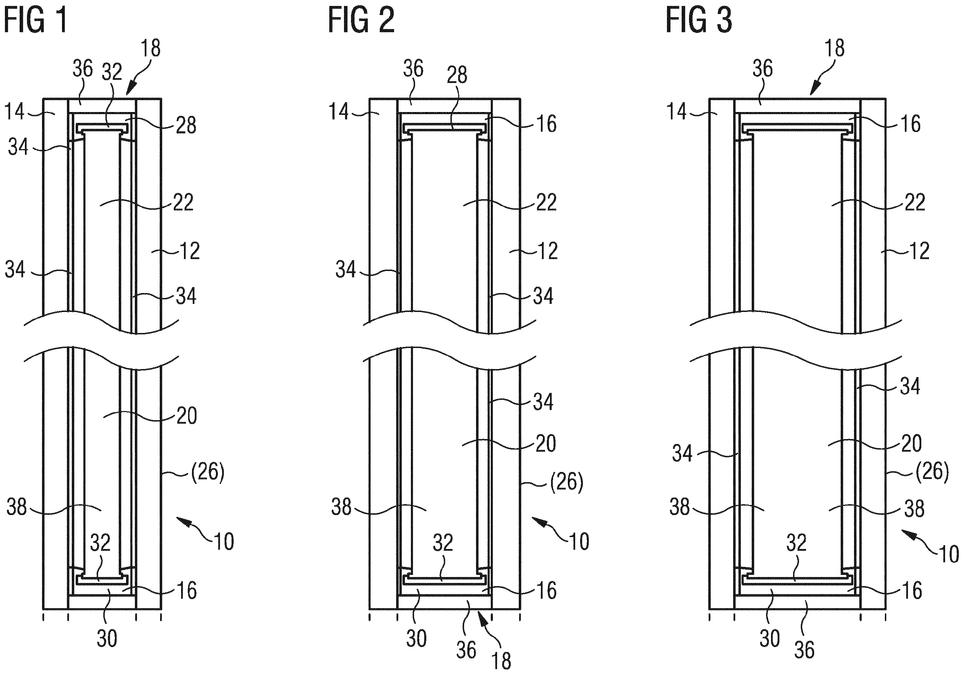

In den Fig. 1 bis 3 sind unterschiedliche Ausführungsformen von Brandschutzgläsern 10 im Schnitt dargestellt.

Die Brandschutzgläser 10 weisen jeweils eine erste Scheibe 12, eine daran mit Abstand befestigte zweite Scheibe 14, Abstandshalter 16, eine umlaufende Abdichtung 18 zum Abdichten des Zwischenraums 20 zwischen den Scheiben 12 und 14 und ein Brandschutzmaterial 22 auf, das den Zwischenraum 20 vollständig ausfüllt.

Die Brandschutzgläser sind z.B. vom Grundaufbau her so aufgebaut, wie dies in der DE 35 30 968 A1 beschrieben und gezeigt ist. Auch als Brandschutzmaterial 22 kann ein Brandschutzmaterial der aus der DE 35 30 968 A1 bekannten Art eingesetzt sein. Auch vergleichbare Brandschutzmaterialien sind möglich.

Zur Herstellung wird, wie dies in der DE 35 30 968 A1 beschrieben ist, zunächst ein Rohling vorgefertigt, in dem die erste Scheibe 12 und die zweite Scheibe 14 mittels der Abstandshalter 16 verbunden werden. Der so gebildete Zwischenraum 20 wird mittels der Abdichtung 18 bis auf eine später noch erläuterte Befüllöffnung und eine Entlüftungsöffnung an zwei diametral gegenüberliegenden Eckbereichen frei gelassen.

Die Herstellung der Befüll- und Entlüftungsöffnung kann ebenso geschehen, wie in der DE 35 30 968 A1 erläutert. Durch eine Befüllöffnung wird anschließend ein Ausgangsmaterial - im Folgenden Brandschutzzusammensetzung 24 genannt - eingefüllt, welches dazu ausgebildet ist, durch Polymerisation und Gelbildung nach Einfüllen in den Zwischenraum 20 das Brandschutzmaterial 22 zu bilden. Auch dies ist in der DE 35 30 968 A1 im Einzelnen beschrieben.

Der Rohling wird im Folgenden mit dem Bezugszeichen 26 bezeichnet. Darunter wird im Folgenden die Einheit aus der ersten und zweiten Scheibe 14 mit Abstandshalter 16 und Abdichtung 18 verstanden, woraus dann durch Befüllen des Zwischenraums 20 und anschließender Polymerisation bzw. Gelbildung das Brandschutzglas 10 herzustellen ist.

Im Folgenden werden Ausführungsbeispiele für den Rohling 26 bzw. das daraus hergestellte Brandschutzglas 10 anhand der Darstellung der Fig. 1 bis 3 näher erläutert.

Die Ausführungsformen der Fig. 1 bis 3 unterscheiden sich im Wesentlichen durch unterschiedliche Abstände zwischen der ersten Scheibe 12 und der zweiten Scheibe 14, so dass jeweils ein unterschiedliches Volumen des Zwischenraums 20 und eine unterschiedliche Dicke des Zwischenraums 20 vorgesehen ist. Dadurch lassen sich unterschiedliche Brandschutzklassen ausbilden. Das in Fig. 3 dargestellte Brandschutzglas 10 weist aufgrund der größeren Dicke eine höhere Brandschutzklasse als die Brandschutzgläser 10 der Fig. 1 und 2 auf. Beispielsweise ist das Brandschutzglas der Fig. 1 als G30-Glas ausgebildet, das einer einseitigen Feuerbeaufschlagung 30 Minuten Stand hält, das Glas gemäß Fig. 2 ist als G60-Glas ausgebildet, welches 60 Minuten Stand hält und das Brandschutzglas 10 gemäß Fig. 3 ist als G90-Glas ausgebildet, welche 90 Minuten Stand hält.

Die Fig. 1 bis 3 zeigen jeweils Schnitte an einem seitlichen Kantenbereich der Brandschutzgläser 10.

Die Scheiben 12, 14 sind beispielsweise als Einscheibensicherheitsglas-Scheibe (ESG-Scheibe) mit einer Dicke von 4 bis 10 mm, insbesondere 6 mm, ausgebildet. Als Abstandshalter 16 ist ein C-Profil aus entsprechend geeignetem Material, wie z.B. Metall oder Leichmetall oder geeigneten Kunststoffen oder Keramiken, ausgebildet. Es sind insgesamt vier C-Profile 28 vorgesehen, welche die vier Rahmenholme 30 eines Abstandshalter-Rahmens ausbilden. Die vier Rahmenholme 30 sind an den Ecken über Eckverbinder 32 miteinander verbunden, im Wesentlichen wie dies in der DE 35 30 968 A1 beschrieben und gezeigt ist.

Die Übergangsbereiche zwischen den C-Profilen und den Scheiben 12, 14 sind mittels je einer Butylschnur 34 abgedichtet. Die Butylschnüre 34 bilden somit einen ersten Teil der Abdichtung 18. Rahmenseitig umlaufend ist ein zweiter Teil der Abdichtung 18 durch eine Thiokol/Polysulfat-Masse 36 zum Abdichten vorgesehen.

Das Brandschutzmaterial 22 ist vorzugsweise eine Brandschutzflüssigkeit in Form eines Hydrogels 38, welches die Eigenschaft besitzt, unter erhöhter Temperatur milchig zu werden und zu kühlen.

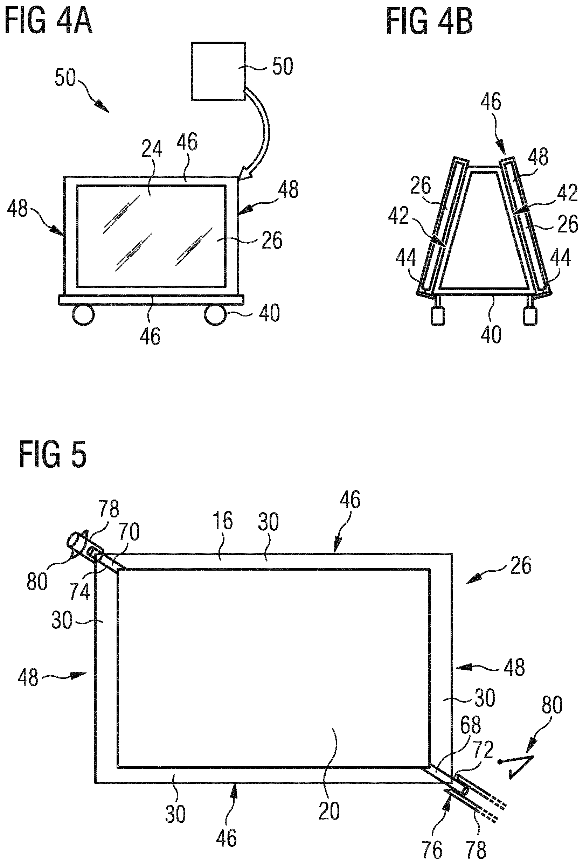

Im Folgenden wird anhand der Darstellung der Fig. 4a und 4b ein bisher übliches Verfahren zum Herstellen derartiger Brandschutzgläser 10 näher erläutert. Für die Brandschutzgläser 10 wird jeweils ein Rohling 26 hergestellt, wobei anschließend eine Polymerisation zur Gel-Erzeugung innerhalb des Rohlings 26 erfolgt. Bei dem bisherigen Verfahren werden die Rohlinge 26 vorproduziert und auf sogenannte A-Wagen 40 gepackt. Die A-Wagen 40 haben an jeder Seite eine schräge Ablagefläche 42 und eine untere Auflagefläche 44, so dass auf jedem A-Wagen 40 zwei Rohlinge 26 mit waagrechten längeren Kanten 46 und mit vertikalen und schrägen kürzeren Kanten 48 aufliegen. Die A-Wagen 40 werden dann zu einer Befüllstation 50 geschoben, wo sie mit den Ausgangskomponenten für das Brandschutzmaterial 22 befüllt werden. Nach der Befüllung muss eine Wartezeit für die Polymerisation abgewartet werden.

Zur Herstellung von zwanzig Scheiben müssen demnach zehn Wagen 40 für die Produktion und für die Wartezeit bereitgestellt werden.

Will man z.B. in der Großserie 120 Brandschutzgläser pro Tag herstellen, so benötigt man unter Berücksichtigung der Polymerisationszeit insgesamt 60 Wagen 40. Demnach ist bei der bisherigen üblichen Vorgehensweise zur Herstellung von Brandschutzgläsern 10 sehr viel Platz und sehr viel Personal zur Herstellung notwendig.

Bei der bisherigen Herstellweise werden die sogenannten A-Wagen 40 mit Lagerflächen 42, 44 für Brandschutzgläser 10 bereitgestellt, die gegenüber der Vertikalen geneigt sind. Auf diesen Wagen 40 werden die Rohlinge 26 aufgebracht, die bereits aus zwei Scheiben 12, 14 mit Abstandshalter 16 dazwischen bestehen. Das Befüllen des Zwischenraums 20 erfolgt auf dem Wagen 40. Dabei wird zunächst ein erster Rohling 26 auf der ersten Seite des jeweiligen A-Wagens 40 und danach noch ein zweiter Rohling 26 auf der gegenüberliegenden zweiten Seite des A-Wagens 40 befüllt. Dann wird der Wagen 40 abgestellt und muss für die Zeit zur Polymerisation - z.B. vier Stunden - in Ruhe gelassen werden.

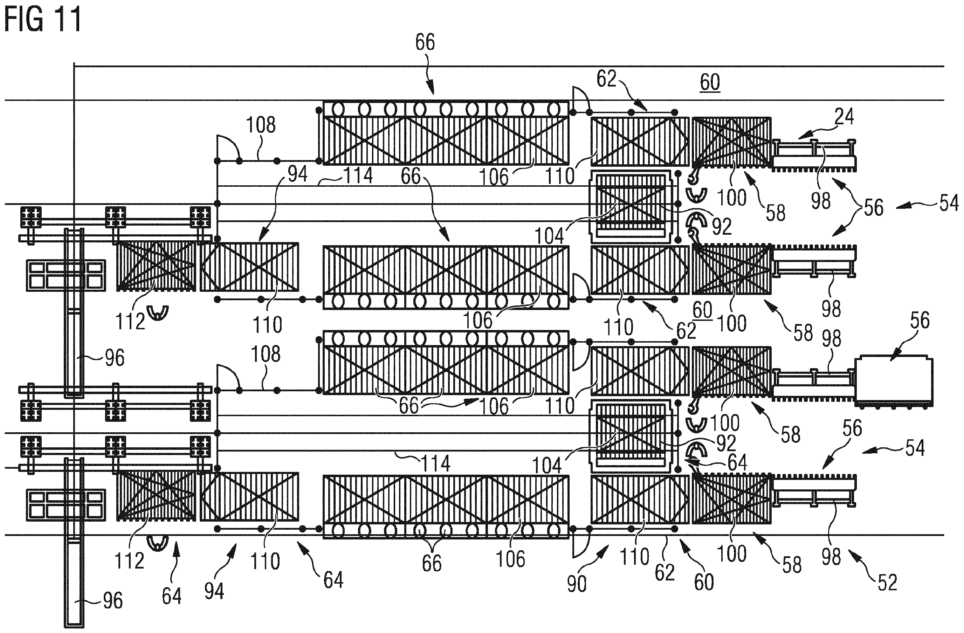

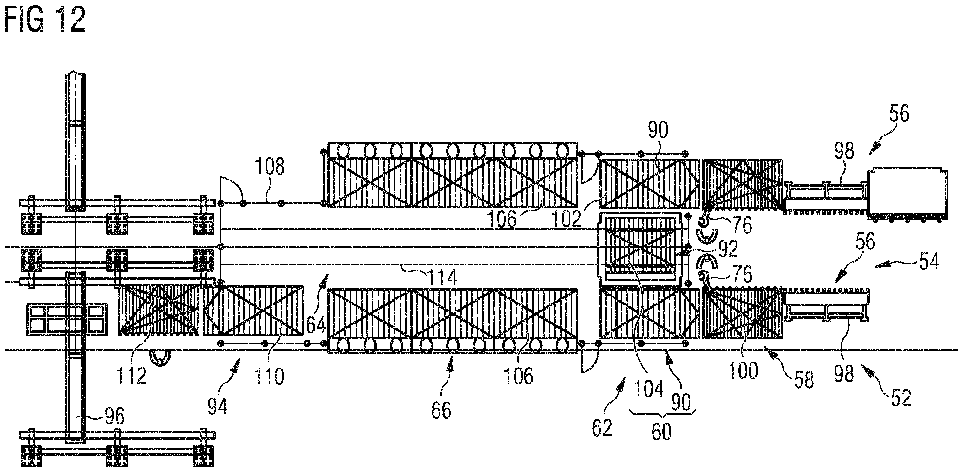

Im Folgenden werden anhand der verbleibenden Fig. 5 bis 13 eine Vorrichtung 52 und ein Verfahren zur Serienherstellung der Brandschutzgläser 10 beschrieben, mit dem die Brandschutzgläser 10 möglichst linear, mit wenig Personal und Verlusten, herstellbar sind. Die Brandschutzgläser 10 werden nicht mehr chargenweise auf Wagen 40 produziert, sondern auf einer Fertigungslinie. Eine Übersicht über die Fertigungslinie ist in den Fig. 11 und 12 wiedergegeben. Fig. 11 zeigt eine Darstellung einer auf hohen Durchsatz ausgerichteten Vorrichtung 52, wo zwei Fertigungslinien 54 zur parallelen Herstellung von Brandschutzgläsern 10 vorgesehen sind. Fig. 12 zeigt eine der Fertigungslinien 54 in größerem Maßstab.

An jeder Fertigungslinie 54 gibt es eine Rohling-Anlieferungseinheit 56 zum Bereitstellen der Rohlinge 26. Anschließend ist eine Befülleinheit 58 vorgesehen. Die Befülleinheit 58 ist vorzugsweise als Befüll- und Kippeinheit 60 ausgebildet und stellt somit auch eine Kippeinheit 62 bereit, in der der befüllte Rohling gekippt wird. Es kann auch eine gesonderte Kippeinheit 62 vorgesehen sein, die zum Kippen des mit der Brandschutzmaterialzusammensetzung 24 befüllten Rohlings 26 in eine horizontale Lage ausgebildet ist.

Demnach ist nach der Befülleinheit 58, wo der Rohling 26 befüllt wird, eine Kippeinheit 62 vorgesehen, wo der Rohling 26 horizontal ausgerichtet wird. Weiter ist eine Transporteinheit 64 vorgesehen, mittels der die Rohlinge 26 transportiert werden können. Insbesondere ist ein Ruhelager 66 vorgesehen, in welches die befüllten Rohlinge 26 abgelegt werden können, um die Polymerisationszeit innerhalb des Ruhelagers 66 abzuwarten. Nach einer vorgegebenen Ruhezeit wird der jeweilige Rohling durch die Transporteinheit 64 wieder ausgelagert und dann der Weiterverarbeitung zugeführt.

Bei einer Ausgestaltung gibt es somit eine Fertigungslinie 54, die zur Fertigung der Brandschutzgläser 10 in einer Linie ausgebildet ist. Innerhalb der Fertigungslinie gibt es eine Anlieferung des Brandschutzglas-Rohlings 26 mit den Scheiben 12, 14. Nach der Anlieferung erfolgt eine Befüllung in einer Befülleinheit 58. Anschließend wird der Rohling 26 weitertransportiert, in die Horizontale gelegt und dann an einen Ruheort verfahren. Von diesem Ruheort aus wird nach der durchgeführten Polymerisation die Herstellung des Brandschutzglases 10 durch vollständige Abdichtung des Zwischenraums 20 fertiggestellt und dann zur Weiterverarbeitung transportiert.

Der Rohling 26 kann an der gleichen Produktionsstätte, wo die Fertigungslinie 54 steht, vorgefertigt werden. Es ist aber auch möglich, den Rohling 26 an irgendeinem anderen Ort herzustellen und dann zu der Fertigungslinie 54 zu transportieren. Ein an der Rohling-Anlieferungseinheit 56 bereitgestellter Rohling kann die in Fig. 5 schematisch dargestellte Form haben. Hier ist stark schematisiert eine Schnittdarstellung durch den Abstandshalter 16 mit den Rahmenholmen 30 wiedergegeben, wobei zwei diametral gegenüberliegende Eckverbinder 32 Öffnungen aufweisen, von denen eine Öffnung als Befüllöffnung 68 und die andere Öffnung als Entlüftungsöffnung 70 dient.

In die Befüllöffnung 68 wird eine Befülltülle 72 eingeführt. In die Entlüftungsöffnung 70 wird eine Entlüftungstülle 74 eingeführt. Die Tüllen 72, 74 weisen jeweils ein Einführrohr 76 auf, welches in entsprechende Öffnungen in den Eckverbindern 32 einführbar ist. Weiter können die Tüllen 72, 74 einstückig mit dem Einführrohr 76 oder - wie hier dargestellt aufgesetzt - einen flexiblen Schlauch 78 aufweisen, der mittels Klemmen 80 zusammenklemmbar ist, um so die Öffnungen 68, 70 zu verschließen.

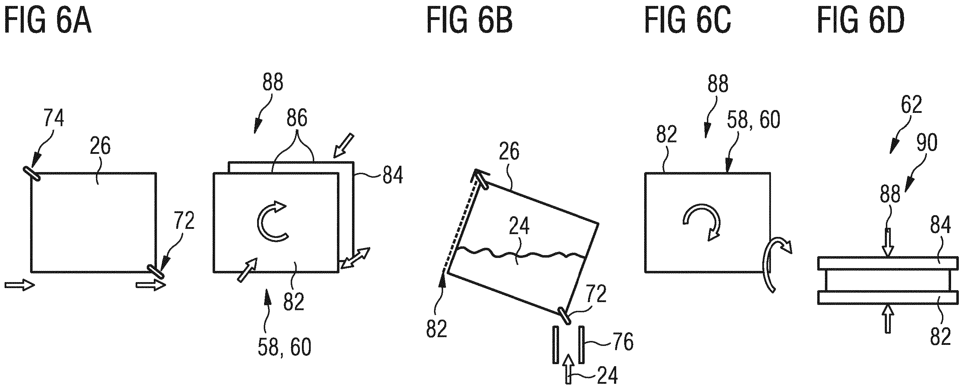

Wie in Fig. 6a dargestellt, wird der Rohling 26 angeliefert und an eine Lagerplatte 82 der Befüll- und Kippeinheit 60 angelegt. Die Lagerplatte 82 ist vorzugsweise leicht schräg, ähnlich wie die schräge Abstützfläche 42 eines A-Wagens 40. Gegen die Lagerplatte 82 wird dann eine Gegenlagerplatte 84 gefahren und mit einer hier nicht näher dargestellten Spanneinrichtung oder Befestigungseinrichtung mit der Lagerplatte 82 verspannt. Die beiden Platten 82, 84 wirken als Druckplatten 86, um ein Ausbeulen der Scheiben 12, 14 während des Befüllvorgangs zu vermeiden. Vorzugsweise in diesem Zustand werden die Tüllen 72, 74 in die entsprechenden Öffnungen in dem Rohling 26 eingeführt. Die durch die Platten 82, 84 und den entsprechenden Spannmechanismus gebildete Spanneinheit 88 wird zusammen mit dem Rohling in der Befüll- und Kippeinheit 60 gekippt, so dass die untere Seite nicht mehr waagerecht, sondern leicht geneigt ist. Beispielsweise erfolgt eine Neigung um 10 Grad gegenüber der Horizontalen. Dies erfolgt so, dass die Befüllöffnung 68 den tiefsten Punkt des Rohlings 26 darstellt. Anschließend wird der Rohling 26 von unten her mit den Ausgangskomponenten des Brandschutzmaterials 22, wie z.B. einer Brandschutzzusammensetzung 24, befüllt.

Wie dann in Fig. 6c dargestellt, wird die Spanneinheit 88 mit dem darin eingespannten Rohling 26 wieder zurück in die waagerechte Lage verfahren und anschließend um eine Längsachse gekippt, so dass der Rohling 26 in der horizontalen Richtung ausgerichtet ist, wie dies in Fig. 6d dargestellt ist. Anschließend wird der befüllte Rohling in das Ruhelager 66 eingelagert.

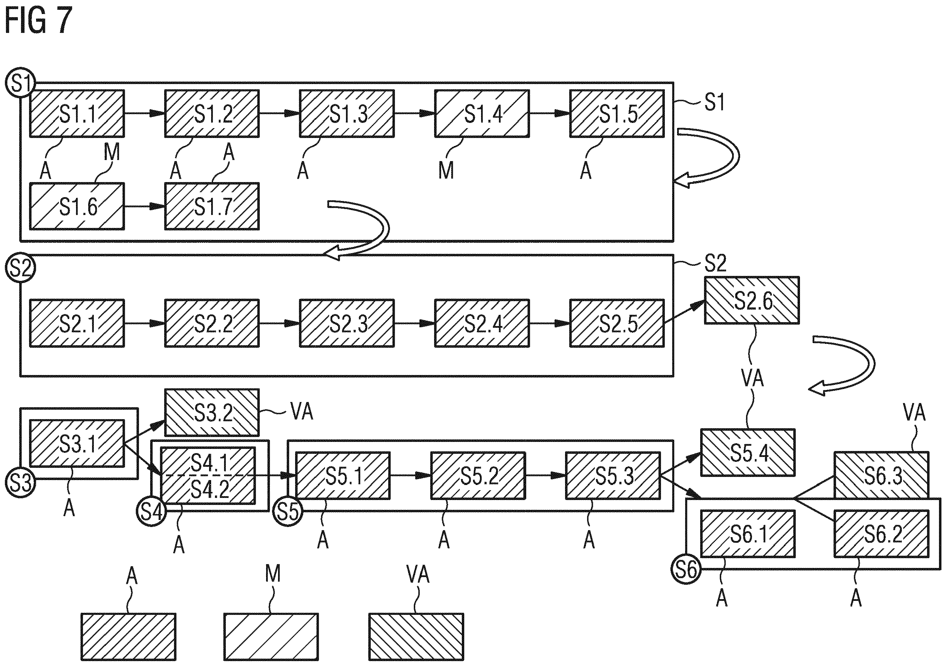

Fig. 7 zeigt eine Blockdiagramm-Darstellung für einen möglichen Ablauf des Verfahrens zur Serienherstellung der Brandschutzgläser in der Übersicht. Dabei bedeutet A einen automatischen Prozess, M einen manuellen Prozess und VA bezeichnet Schritte, um die Vorrichtung wieder in die Ausgangsposition zu bringen.

Das Verfahren weist nach dem hier nicht dargestellten Anlieferungsschritt einen Schritt S1 des Befüllens des Rohlings 26, einen Schritt S2 des Kippens des befüllten Rohlings 26 in eine horizontale Lage, einen Schritt S3 des Einlagerns des befüllten Rohlings 26 in das Ruhelager 66, einen Schritt S4 zum Durchführen der Polymerisation, einen Schritt S5 des Auslagerns und einen Schritt S6 des Kippens aus der waagerechten Position in eine schräge Transportlage und anschließend einen hier nicht näher dargestellten Schritt des Transportes zur Weiterverarbeitung auf.

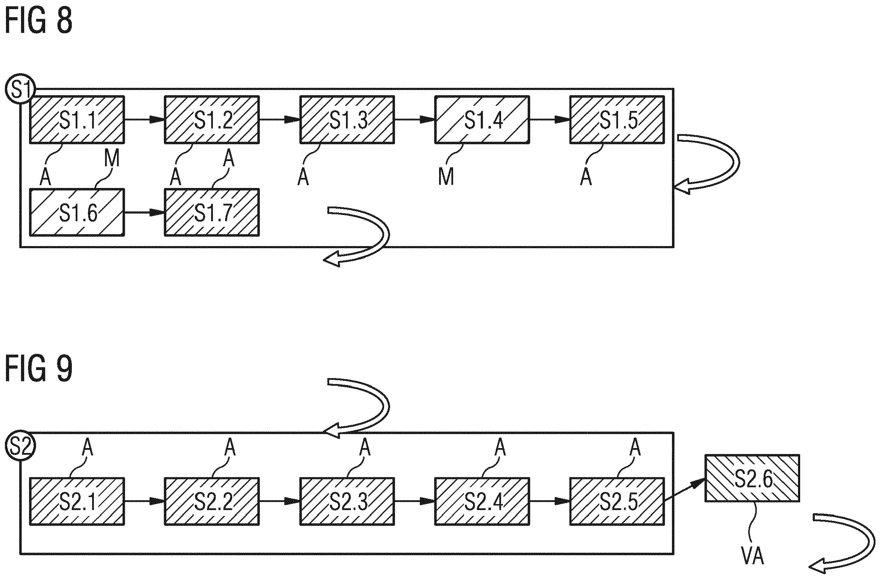

Die einzelnen Unterschritte des Befüllschritts S1 werden im Folgenden anhand der Darstellung von Fig. 8 näher erläutert. Darin bedeutet:
S1.1 Rohling (Scheibe) in Fülleinrichtung einführen, z.B. mittels Fördergurt, Rollen...
S1.2 Rohling über gesamte Fläche eben spannen
S1.3 gespannten Rohling schrägstellen
S1.4 Anschlüsse anbringen
S1.5 Füllen - dabei das Bauchen der Scheiben über den gesamten Füllprozess verhindern/unterdrücken
S1.6 Anschlüsse entfernen
S1.7 gefüllten Rohling aus schräger Position schwingungsarm/-frei wieder in waagerechte Position (Transportlage) bringen.

Anschließend erfolgt das Kippen S2 des gefüllten Rohlings 26 aus der Transportlage in eine horizontale Lagerlage. Die einzelnen Schritte sind in Fig. 9 als Blockdiagramm dargestellt. Darin bedeutet:
S2.1 gefüllten Rohling schwingungsarm/-frei im gespannten Zustand eine Station weiter zum vertikalstehenden Schwenktisch transportieren
S2.2 gefüllten Rohling schwingungsarm/-frei auf Schwenktisch ablegen
S2.3 gefüllten Rohling schwingungsarm/-frei im gespannten Zustand von vertikaler Position in horizontale Position (Spanneinrichtung und Schwenktisch)
S2.4 Rohling entspannen
S2.5 gefüllten Rohling von dem liegenden Schwenktisch auf den Sortiertisch befördern
S2.6 Schwenktisch inklusive Spanneinrichtung wieder in Ausgangsposition.

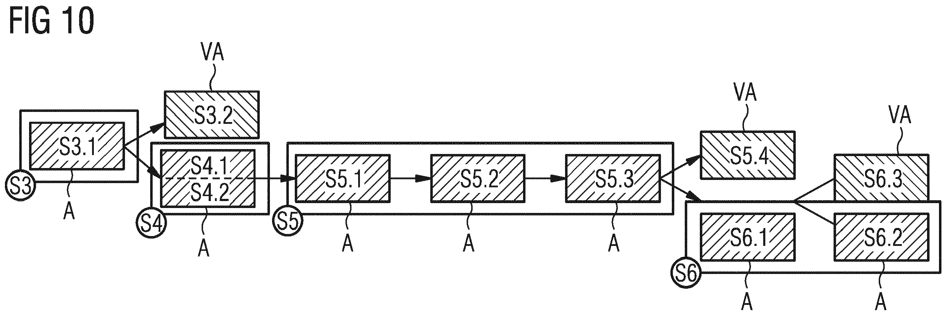

Die Einzelschritte der verbleibenden Schritte S3, S4, S5 und S6 sind in Fig. 10 näher dargestellt.

Demnach weist der Schritt des Einlagerns S3 folgende Unterschritte auf:
S3.1 gefüllten Rohling schwingungsarm/-frei mittels Sortiertisch in den Puffer (Ruhelager), z.B. Pufferfächer von oben nach unten befüllen
S3.2 Sortiertisch wieder in Ausgangsposition.

Der Schritt Polymerisieren S4 weist folgende gleichzeitig durchzuführende Schritte S4.1 und S4.2 auf:
S4.1 gefüllten Rohling schwingungsarm/-frei im Puffer (Ruhelager) bei konstanter Temperatur von 20°C +/- 1°C lagern
S4.2 dabei kontinuierliche Wärmeabführung, um den durch chemischen Prozess erzeugten Temperaturanstieg von ca. 6°C zu kompensieren.

Nach einer vorbestimmten Ruhezeit wird der jeweilige Rohling 26 in dem Schritt S5 wieder ausgelagert. Dieser Schritt S5 weist folgende Schritte auf:
S5.1 Polymerisiertes Brandschutzglas mittels zweitem Sortiertisch schwingungsarm/-frei auslagern
S5.2 Brandschutzglas mittels zweitem Sortiertisch zu horizontal liegendem zweiten Schwenktisch befördern
S5.3 Brandschutzglas von zweiten Sortiertisch auf zweiten Schwenktisch befördern
S5.4 zweiter Sortiertisch wieder in Ausgangsposition.

Der zweite Kippschritt S6 weist folgende Unterschritte auf:
S6.1 zweiter Schwenktisch in vertikale Entnahmeposition bewegen
S6.2 Brandschutzglas von zweitem Schwenktisch entnehmen, z.B. mittels Fördergurt, Rollen...
S6.3 zweiter Schwenktisch wieder in Ausgangsposition.

Einzelheiten zu den einzelnen Schritten S1 bis S6 sind in den folgenden Tabellen 1 bis 4 zusammen mit den möglichen Prozesszeiten wiedergegeben. Dabei sind in der ersten Spalte die jeweiligen übergeordneten Schritte 1 bis 6 (ohne "S") und in der darauffolgenden zweiten Spalte die jeweiligen Unterschritte (ebenfalls ohne "S") angegeben; in der dritten Spalte ist die Beschreibung der einzelnen Schritte bzw. Unterschritte wiedergegeben. Die Spalten 4 und 5 geben beispielhafte Randbedingungen oder Anforderungen an, während in den verbleibenden Spalten Prozesszeiten in Minuten für Hauptprozesse und Nebenprozesse angegeben sind. Ganz am Ende ist in Tabelle 4 die Summe der Zeiten in Minuten angegeben.

Es ist ersichtlich, dass die Herstellungszeiten optimiert sind. Die Einlagerung der Rohlinge zur Polymerisation in horizontale Lage ermöglicht weitgehende Automatisierung des Herstellverfahrens und spart Platz und Personal.

In der in Fig. 11 dargestellten Ausbaustufe mit zwei Fertigungslinien und vier Befüllstationen lassen sich somit pro Arbeitsschicht 120 Brandschutzgläser 10 in einfacher Weise weitgehend automatisiert herstellen.

Derzeit werden die Anschlüsse zum Befüllen und Entlüften noch manuell aufgebracht; z.B. wird ein flexibler Schlauch 78, der zum Befüllen mit einer Mischeinrichtung zum Liefern der Ausgangskomponenten (nicht dargestellt) verbunden ist, auf die Befülltülle 72 aufgesetzt, und anschließend wird der Befüllvorgang durch Entfernen der Klemmen 80 eingeleitet. Es ist auch möglich, dass nur kurze Stücke flexiblen Schlauchs 78 auf die jeweiligen Tüllen 72, 74 aufgebracht sind, und dann am anderen Ende Rohrleitungen, die zur Mischeinrichtung führen, in den Schlauch eingeführt werden. Der flexible Schlauch 78 kann dann während des Polymerisationsprozesses entsprechend zugeklemmt auf den Tüllen 72, 74 bleiben.

Es sind in weiteren Ausgestaltungen aber auch automatische Einführsysteme, beispielsweise robotergesteuert, denkbar.

In Fig. 12 ist eine der Fertigungslinien 54 in größerem Detail dargestellt. Die Kippeinheit 62 weist hier einen ersten Schwenktisch 90 zum Kippen des befüllten Rohlings 26 aus der im Wesentlichen vertikalen Befülllage in die im Wesentlichen horizontale Lagerlage auf und einen zweiten Schwenktisch 94 zum Kippen des auspolymerisierten Brandschutzglases 10 aus der horizontalen Lagerlage in eine im Wesentlichen vertikale, vorzugsweise leicht schräge, Transportlage auf.

Die Transporteinheit 64 weist wenigstens einen Sortiertisch 92 zum Einlagern und Auslagern oder einen ersten Sortiertisch 92 zum Einlagern und einen hier nicht näher dargestellten zweiten Sortiertisch zum Auslagern sowie weitere Transporteinrichtungen, wie Vertikalförderer und Walzenförderer auf.

Das Ruhelager 66 ist vorzugsweise als automatisches Lagerregal, beispielsweise jeweils mit 30 Plätzen, ausgebildet. Weiter kann ein Kran 96 zum Weitertransport vorgesehen sein.

Im Einzelnen umfassen die Fertigungslinien 54 in bevorzugter Ausgestaltung jeweils: einen oder zwei Vertikalförderer 98,zum Bilden der Rohling-Anlieferungseinheit 56, einen oder zwei Füllkipptische 100, die an der Befülleinheit 58 angeordnet sind und die Rohlinge 26 in schräger vertikaler Lage von dem Vertikalförderer 98 übernehmen und mit der Spanneinrichtung 88 versehen sind, um den aufgenommenen Rohling 26 zu verspannen und in die schräge Befülllage zu kippen und anschließend wieder in die waagerechte Vertikallage zum Transport zurückzukippen, den ersten Schwenktisch 90 in Form eines Walzenförderers 102 mit Klappbahnteil zum automatischen Transport, einen Transportshuttle 104 zum Bilden des ersten und/oder zweiten Sortiertisches 92, ein Aushärte-Lagerregal 106, welches das Ruhelager 66 bildet und z.B. dreißig Fächer aufweist, die teils übereinander (z.B. zehn Fächer übereinander) und nebeneinander angeordnet sind und durch den Transportshuttle 104 automatisch zum Einlagern und zum Auslagern nach einer vorbestimmten Aushärtezeit anfahrbar sind, eine Sicherheitseinrichtung 108 für das automatische Lagersystem, einen weiteren Walzenförderer 110 mit Klappbahnteil für einen automatischen Transport, welcher den zweiten Schwenktisch 94 bildet, und einen Abnahme-Kugelrollenkipptisch 112 zur manuellen Handhabung.

Das Transportshuttle 104 ist beidseitig ausfahrbar, so dass an beiden Seiten einer Bewegungsbahn 114 für das Transportshuttle 104 jeweils ein Aushärte-Lagerregal 106 angeordnet werden kann und auf beiden Seiten jeweils eine Befülleinheit 58 und eine Kippeinheit 62 vorgesehen werden kann.

Mit einer derartigen Vorrichtung 52 lassen sich die in den Tabellen 1 bis 4 und in den Fig. 7 bis 10 dargestellten Schritte S1 bis S6 wie folgt durchführen:
Gemäß einer Ausführungsform wird ein Verfahren zum Herstellen von Brandschutzgläsern 10 beschrieben, wobei zuvor eine Reihe von Rohlingen 26 hergestellt wird und eine Polymerisation zur Gel-Erzeugung innerhalb des jeweiligen Rohlings 26 erfolgt.

Die Herstellung erfolgt nicht mehr chargenweise auf Wagen, sondern in einer Fertigungslinie 54. An der Fertigungslinie 54 erfolgt eine Anlieferung des Brandschutzglas-Rohlings 26 mit den beabstandeten Scheiben 12, 14. Die Fertigungslinie 54 hat wenigstens eine Befülleinheit 58, wo der Rohling 26 befüllt wird; anschließend wird der Rohling 26 weitertransportiert, in die Horizontale gelegt und dann an einen Ruheort verfahren. Von diesem Ruheort wird nach der Polymerisation in der Produktionslinie weiter verfahren.

Die Vorrichtung 52 umfasst demnach folgende Einheiten:
- eine Brandschutzglas-Rohling-Anlieferungseinheit 56, die Brandschutzglas-Rohlinge 26 liefert. Die Rohlinge 26 können dabei im Betrieb oder woanders hergestellt werden.
- die Befülleinheit 58, wo die Rohlinge 26 befüllt werden.
- eine Kippeinheit 62, wo die Scheibenanordnung (Rohling 26) aus der Befülllage in eine Horizontallage gebracht wird. Befülllage heißt z.B. eine leichte Schräglage, damit die Scheibe gehalten wird; dies wird im Folgenden noch unter der Beschreibung der Befülleinheit näher erläutert. In der Kippeinheit wird die Scheibe in eine horizontale Lage gebracht
- eine Transporteinheit 64: Zum Transport der befüllten Brandschutzglasscheibenanordnung in einer Ruhezone zwecks Polymerisation bzw. Gel-Bildung.

Nach der Ruhezeit ist das eine Brandschutzscheibe bildende Brandschutzglas verarbeitungsfertig und kann zur weiteren Verarbeitung geliefert werden. Die Weiterverarbeitung betrifft z.B. Produktion von Brandschutzelementen wie Türen, Verglasungen usw. D.h. nach einer kurzen Bearbeitung, in der Füllelemente oder dergleichen noch entfernt werden und die Befüll- und Entlüftungsöffnung verschlossen werden, sind die Brandschutzgläser 10 bereits fertig gestellt.

Der Brandschutzglas-Rohling 26 wird bereits mit wenigstens zwei Scheiben 12, 14 und Abstandshalter 16 dazwischen bereit gestellt. Hierzu werden Glasscheiben mit dem Abstandshalter 16 verbunden.

Eine Besonderheit ist noch die Fülltechnik: Diese betrifft an zwei gegenüber liegenden Ecken des Rohlings 26 das Vorsehen von Füllstutzen und Entlüftungsstutzen, z.B. in Form der Tüllen 72, 74. Hierzu sind die Abstandshalter 16 so konstruiert, dass zur Diagonale heraus eine Stutzenöffnung frei bleibt, wo ein entsprechend flexibler Schlauch 78 aufgesetzt werden kann. Der Schlauch 78 kann dann mit Klemmen 80 abgeklemmt werden, wenn der Befüllvorgang erfolgt ist.

Bei der Anlieferung wird demnach der Rohling 26 mit Abstandshalter 16 und vorzugsweise bereits zumindest mit Füllstutzen angeliefert.

An der Befülleinheit 58 erfolgt dann das Einführen des Rohlings 26 in einer Transportlage, in der die Scheiben 12, 14 mit waagerechten langen Seitenkanten und vertikal und schräg geneigten kurzen Seitenkanten eingeschoben werden.

Dann wird der Rohling 26 mittels der Spanneinrichtung 88 gespannt. Hierzu wird der Rohling 26 mit einer ersten Scheibe vollflächig an einer Grundplatte 82 angelegt; dagegen wird eine Gegenplatte 84 verfahren, um die Scheiben 12, 14 auf Toleranz zu bringen und zu halten.

Der Rohling 26 wird bereits schräg geneigt angeliefert, so dass sie nicht umfällt. D.h. die Scheiben 12, 14 laufen mit horizontaler Grundkante; die Grundkanten oben und unten sind aber seitlich versetzt. In dieser Schrägstellung erfolgt das Spannen; gegen die Grundplatte 82 wird die Gegenplatte 84 gefahren.

Der gesamte Mechanismus mit den beiden Platten 82, 84 und dem dazwischen gespannten Rohling 26 (Scheibenanordnung) wird dann um eine senkrecht auf der Scheibenebene stehende Achse geneigt, um diesen schräg zu stellen. D.h. eine der Ecken (vorne oder hinten) wird gegenüber der anderen Ecke angehoben. Genauer wird die nicht mit der Befüllöffnung versehene untere Ecke gegenüber der mit der Befüllöffnung versehenen unteren Ecke angehoben. Hier erfolgt dann das Befüllen in dieser schrägen Neigung.

Die Befüllung erfolgt von unten nach oben, damit eine Blasenbildung vermieden wird. Hierzu werden Anschlüsse an den Schlauchenden angebracht, und der Zwischenraum 20 des Rohlings 26 wird befüllt.

Dem hydrostatischen Druck wird mittels der Spanneinrichtung 88 entgegen gewirkt, um Bauchung vorzubeugen.

Anschließend werden die Anschlüsse entfernt. Dann folgt ein Waagrechtstellen, d.h. die zuvor erfolgte Anhebung der einen Ecke wird wieder zurückgeführt, so dass die Ecken wieder auf der gleichen Höhe sind.

Damit ist die Bearbeitung innerhalb der Befüllstation beendet.

Im Folgenden wird die Halteeinrichtung zum Halten und Spannen der Platten 82, 84 erläutert.

Hier ist eine erste Transporteinrichtung vorgesehen, in der die Grundplatte 82 schwenkbar befestigt ist. Die Gegenplatte 84 ist, beispielsweise in einer zweiten Transporteinrichtung, befestigt und fährt im Verlauf des Prozesses vor dem Befüllen zum Spannen in Richtung Gegenplatte. Die aus Platten 82, 84 und Halteeinrichtung gebildete Spanneinrichtung 88 wird vom Füllen weiter geführt.

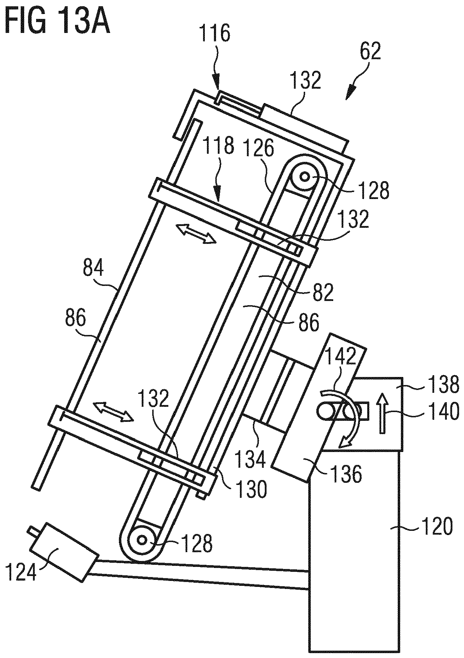

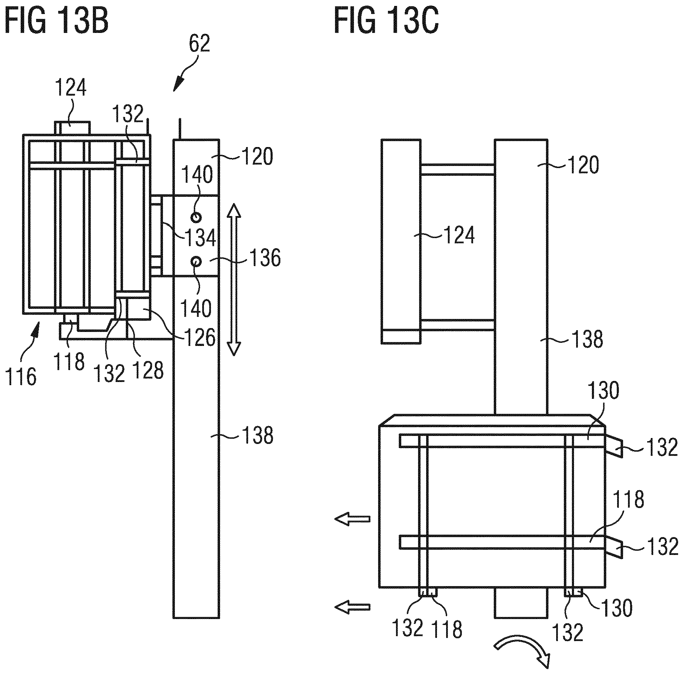

Bei einer nicht näher dargestellten Ausgestaltung sind hintereinander angeordnete Einheiten aus Grundplatte 82 und Gegenplatte 84 vorgesehen, die durch die Befülleinheit und Kippeinheit hindurch geführt werden. Dies kann auf beliebige andere Art und Weisen erfolgen. Mögliche Ausführungsformen wären, nur die Grundplatte zu verfahren und die Gegenplatte jeweils einzeln anzuliefern und an der Grundplatte zu befestigen. Eine andere Ausführungsform wäre, die Gegenplatte und die Grundplatte jeweils einzeln anzuliefern, im Spannvorgang miteinander zu verbinden und dann diese Einheit entsprechend zu handhaben. Eine weitere mögliche Ausführungsform ist in Fig. 13 dargestellt.

Die Kippeinheit 62 weist einen ersten Schwenktisch 90 auf. Der Begriff "Schwenktisch" ist nicht unbedingt im Sinne eines Tisches zu verstehen. Selbstverständlich könnte auch ein Tisch ausgebildet sein. Bei der bevorzugten Ausgestaltung ist vorgesehen, dass an dieser Station die Platten 82, 84 um die horizontale Achse herum gedreht werden, so dass die Einheit aus Grundplatte 82 und Gegenplatte 84 aus der ca. um 5 bis 10°, z.B. 7° geneigten Transportstellung in die Horizontale gekippt werden.

Der Schritt S2.4 "gefüllte Scheibenanordnung entspannen" umfasst, die Gegenplatte 84 von der Brandschutzscheibenanordnung anzuheben und noch einmal in die Ausgangslage zu bringen, d.h. für einen neuen Prozess an einem neuen Brandschutzglas-Rohling 26.

Gleichzeitig fährt die Grundplatte 82 herunter, um die Brandschutzscheibenanordnung auf Rollen oder Walzen aufzulegen.

Für eine Übergabe von der Grundplatte 82 auf Rollen der Transporteinheit gibt es unterschiedliche Möglichkeiten.

Der erste Schwenktisch 90 und die Spanneinrichtung 88 (dies sind nach der bisherigen Beschreibung insbesondere die Grundplatte 82 und die Gegenplatte 84 mit zugehöriger Halteeinrichtung) fahren zurück in die Ausgangsposition. Damit ist die Station "Kippen oder Schwenken" erledigt.

Danach erfolgt der Transport in die Lagerung - Ruhelager 66. Dieser sollte möglichst schwingungsfrei erfolgen, damit der Polymerisationsprozess und die Scheiben nicht beeinträchtigt werden. Anstelle von Rollen könnten hier auch Transportbänder eingesetzt werden. An diese Transportbänder werden die Rohlinge 26 bei der Schwenkposition übergeben.

Das Lager zur Polymerisation hat mehreren Fächer, die entsprechend nach oben und nach unten verfahren werden können. Hier kommt ein Lagersystem in Betracht, welches entsprechend zeitgesteuert die fertigen Scheiben wieder herauslagern und die neuen Scheiben hineinlagern kann.

Schritt S5 ist das Auslagern aus dem Lager; Schritt S6 erfolgt bei der letzten Station, hier wird das Brandschutzglas 10 wieder von der horizontalen Lage in eine leicht geneigte Lage gebracht.

In dieser Lage wird die Brandschutzscheibe dann der weiteren Produktion zugeführt.

In der Fig. 11 sind gleich zwei entsprechende Anlagen zur Brandschutzglasproduktion gezeigt. Es sind die Ruhelager 66 gezeigt. Der Transport der Grundplatte 82 und der Gegenplatte 84 der Spannvorrichtung ist hier nicht dargestellt.

Die Befülleinheit 58 ist an eine nicht näher dargestellte Mischeinrichtung zur Bereitstellung der Ausgangskomponenten für das Brandschutzmaterial 22 angeschlossen. Es können Vorratsbehälter mit den einzelnen Komponenten vorgesehen sein, aus denen gemäß der für den laufenden Produktionsprozess gerade vorgegebenen Rezeptur automatisch die Zutaten entnommen und gemischt werden.

In der Fig. 13 ist eine mögliche Ausführungsform der kombinierten Kippeinheit 62 mit Spanneinrichtung 88 dargestellt, wobei in der Teilfigur 13a eine Rückansicht (von links in Fig. 12), in Fig. 13b eine Draufsicht bei sich an der Befülleinheit 58 befindlichen Rohlingsaufnahmeeinrichtung und in Fig. 13c eine Draufsicht in der in die Horizontale zur Abgabe an die Transporteinheit 64 gekippten Rohlingsaufnahme ausgebildet ist.

Die Kippeinheit 62, die gleichzeitig den ersten Schwenktisch 90 bildet, weist eine Rohlingsaufnahmeeinrichtung 116 auf, die durch die Grundplatte 82 und die Gegenplatte 84 und eine Plattenbefestigungseinrichtung 118 gebildet ist.

An einem Maschinenrahmen 120 ist eine untere Fördergurtbahn 124 befestigt, die den Rohling 26 von dem Vertikalförderer 98 aufnimmt und zwischen die Grundplatte 82 und die Gegenlagerplatte 84 transportiert. Die Grundplatte 82 ist über ihre gesamte Breite mit einem Fördergurt 126 versehen, der durch um horizontale Achsen drehende Rollen 128 angetrieben wird. An einer Basis der Grundplatte 82 befindet sich ein Hilfsrahmen 130, an welchem die Gegenlagerplatte 84 auf die Grundplatte 82 zu und von ihr weg beweglich gehalten ist. Eine Bewegung hin zu der Grundplatte 82 und weg davon kann z.B. über Hubzylinder 132 oder dergleichen erfolgen. Durch eine Bewegung der Gegenlagerplatte 84 auf die Grundplatte 82 zu erfolgt ein Spannen des Rohlings 26 zum Befüllen. Der untere Fördergurt 126 ist so bemessen, dass beim Verspannen die mit der Befüllöffnung 68 versehene Ecke zugänglich bleibt. Die Grundplatte 82 ist an einem ersten Drehmechanismus 134 gehalten, der auf einem Wagen 136 montiert ist. Der Wagen 136 ist derart ausgebildet, dass er auf einer Längsbahn 138 in Transportrichtung beweglich ist. Außerdem ist ein Hubmechanismus zum Anheben des ersten Drehmechanismus 134 vorgesehen. Zum Befüllen wird der erste Drehmechanismus 134 etwas angehoben, dann wird durch den ersten Drehmechanismus 134 die Grundplatte 82 mit der Gegenlagerplatte 84 um eine senkrecht zu der Erstreckung der Grundplatte 82 verlaufende erste Drehachse gekippt, um die Befüllöffnung 68 am tiefsten Punkt des Rohlings 26 anzuordnen. In dieser Lage erfolgt das Befüllen. Anschließend wird die Rohlingsaufnahmeeinrichtung 116 wieder in die in Fig. 13a gezeigte Transportlage gebracht, und der Wagen 136 wird entlang der Längsbahn 138 zu der Kippstation überführt, wie dies in Fig. 13c dargestellt ist. Dort wird der Wagen 136 mittels eines zweiten Drehmechanismus 184 um eine sich in Längsrichtung in einer Längsbahn 138 erstreckende zweite Drehachse gekippt, um den Rohling 26 in die horizontale Lage zu bringen. Anschließend wird die Gegenlagerplatte 84 durch den Hubzylinder 132 angehoben; der Rohling 26 wird entspannt und kann mittels des Fördergurts 126, angetrieben durch die Rollen 128, nach links in Fig. 13c heraustransportiert und eine Transporteinheit 64, z.B. an den ersten Sortiertisch 92, übergeben werden.

**Tabelle 1**

| | | | | | Prozess [min] | | | | | Nebenprozess [min] | | | |
|---|---|---|---|---|---|---|---|---|---|---|---|---|---|
| Prozessschritt | | Beschreibung | Anforderung | | 1+2 | 3 | 4 | 5 | 6 | 1 | 2 | 3 | 4 |
| 0 | 0 | Grundlegende Parameter | Max. Scheibenmaß [mm] | 1500 x 3500 (2000 x 4000) | | | | | | | | | |
| | | | Min. Scheibenmaß [mm] | 100 x 100 | | | | | | | | | |
| | | | Max Scheibengewicht [kg] | 500 (750) | | | | | | | | | |
| | | | Min. Schreibenbreite [mm] | 14 | | | | | | | | | |
| | | | Max. Schreibenbreite [mm] | 110 | | | | | | | | | |
| | | | | | | | | | | | | | |
| 1 | 1.1 | Scheiben einführen | Belastbarkeit Rollen, bzw. Fördergut bzgl. scharfer Scheibenkanten + entsprechendem Scheibengewicht | verschleißfest | 0,10 | | | | | | | | |
| | | | Beschädigungen der Scheibenoberfläche/ -Kante vermeiden | | | | | | | | | | |
| | | | Position Einlasstüllen | immer gleiche Position unten links bzw. unten rechts (Abhangig von Flussrichtung) | | | | | | | | | |
| | | | Scheibentoleranz vollflächig | 0,5 mm planparallelität | | | | | | | | | |
| | 1.2 | spannen | Zugänglichkeit zu den Entlüftungstüllen muss gegeben sein (zum "Abziehen" der Schnellkopplung) | | 0,07 | | | | | | | | |
| | | | | | | | | | | | | | |
| | 1.3 | schräg stellen | Schrägstellen der gespannten Scheibe (inkl. Vorrichtung) [*] | 10 | 0,07 | | | | | | | | |
| | 1.4 | Anschlüsse anbringen | 1. Auslass 2 Einlass | | 0,08 | | | | | | | | |
| | 1.5 | füllen | hydrostatischem Druck entgegenwirken Bauchung vorbeugen | 0,5 mm planparallelität | 22,00 | | | | | | | | |
| | 1.6 | Anschlüsse entfernen | 1. Auslass 2. Einlass | | 0,08 | | | | | | | | |
| | 1.7 | waagrecht stellen | schwingungsfrei | | 0,07 | | | | | | | | |
| 2 | 2.1 | gefüllte Scheibe zur nächsten Station (Schwenktisch) befördern | Scheiben konstant spannen schwingungsfrei Beschädigungen der Scheibenoberfläche/ -Kante vermeiden | 0,5 mm planparallelität | 0,25 | | | | | | | | |
| | | | | | | | | | | | | | |
| | | | | | | | | | | | | | |
| | 2.2 | gefüllte Scheibe auf Schwenktisch ablegen | | | 0,08 | | | | | | | | |
| | 2.3 | gefüllte Scheibe von der Vertikalen in die Waagerechte bringen | | | 0,08 | | | | | | | | |
| | 2.4 | gefüllte Scheibe entspannen | schwingungsfrei Beschädigungen der Scheibenoberfläche/ | | 0,07 | | | | | | | | |
| | 2.5 | auf Sortiertisch befördern | -Kante vermeiden | | 0,08 | | | | | | | | |
| | 2.6 | Schwenktisch inkl. Spannvorrichtung in Ausga ngsposition | schnellstmöglich | | | | | | | 0,12 | | | |
| 3 | 3.1 | gefüllte Scheibe einlagern | schwingungsfrei | | | 0,17 | | | | | | | |
| | 3.2 | Sortiertisch in Ausgangsposition | | | | | | | | | 0,13 | | |
| 4 | 4 | gefüllte Scheibe lagern zur Polymerisation | Permanente Wärmeableitung/ Regulierung Temperaturanstieg ca. 6°C | 20°C (+/-0,5°C) | | | 240 | | | | | | |
| | | | schwingungsfrei | | | | | | | | | | |
| | | | Scheibenanordnung "gestapelt" (Auslegung für max. Maße) | | | | | | | | | | |
| 5 | 5.1 | polymerisierte Scheibe auslagern | Beschädigungen der Scheibenoberfläche/ -Kante vermeiden | | | | | 0,17 | | | | | |
| | 5.2 | polymerisierte Scheibe zu Schwenktisch befördern | | | | | | 0,10 | | | | | |
| | 5.3 | polymerisierte Scheibe von Sortiertisch auf Schwenktisch befördern | | | | | | 0,07 | | | | | |
| | 5.4 | Sortiertisch in Ausga ngsposition | | | | | | | | | | 0,13 | |
| 6 | 6.1 | Schwenktisch in Entnahme Position bringen | | | | | | | 0,07 | | | | |
| | 6.2 | Schwenktisch in Ausgangsposition | | | | | | | | | | | 0,13 |
| | 6.3 | Entnahme der Scheibe via Rollen, bzw Fördergurt | Belastbarkeit Rollen, bzw., Fördergut bzgl. scharfer Scheibenkanten + entsprechendem Scheibengewicht | | | | | | 0,17 | | | | |
| Summe der Zeiten | | | | | 23,03 | 0,17 | 240 | 0,33 | 0,23 | 0,12 | 0,13 | 0,13 | 0,13 |

| Prozessschritt | | Beschreibung | Anforderung | | 1+2 | 3 | 4 | 5 | 6 | 1 | 2 | 3 | 4 |
|---|---|---|---|---|---|---|---|---|---|---|---|---|---|
| 0 | 0 | Grundlegende Parameter | Max. Scheibenmaß [mm] | 1500 x 3500 (2000 x 4000) | | | | | | | | | |
| | | | Min. Scheibenmaß [mm] | 100 x 100 | | | | | | | | | |
| | | | Max. Scheibengewicht [kg] | 500 (750) | | | | | | | | | |
| | | | Min. Schreibenbreite [mm] | 14 | | | | | | | | | |
| | | | Max. Schreibenbreite [mm] | 110 | | | | | | | | | |
| | | | | | | | | | | | | | |
| | 1.1 | Scheiben einführen | Belastbarkeit Rollen, bzw. Fördergut bzgl. scharfer Scheibenkanten + entsprechendem Scheibengewicht | verschleißfest | 0,10 | | | | | | | | |
| | | | Beschädigungen der Scheibenoberfläche/ -Kante vermeiden | | | | | | | | | | |
| | | | Position Einlasstüllen | immer gleiche Position unten links bzw. unten rechts (Abhängig von Flussrichtung) | | | | | | | | | |
| 1 | | | Scheibentoleranz vollflächig | 0,5 mm planparallelität | | | | | | | | | |
| | 1.2 | spannen | Zugänglichkeit zu den Entlüftungstüllen muss gegeben sein (zum "Abziehen" der Schnellkopplung) | | 0,07 | | | | | | | | |
| | 1.3 | schräg stellen | Schrägstellen der gespannten Scheibe (inkl. Vorrichtung) [*] | 10 | 0,07 | | | | | | | | |
| | 1.4 | Anschlüsse anbringen | 1. Auslass 2. Einlass | | 0,08 | | | | | | | | |
| | 1.5 | füllen | hydrostatischem Druck entgegenwirken Bauchung vorbeugen | 0,5 mm planparallelität | 22,00 | | | | | | | | |
| | 1.6 | Anschlüsse entfernen | 1. Auslass 2 Einlass | | 0,08 | | | | | | | | |
| | 1.7 | waagrecht stellen | schwingungsfrei | | 0,07 | | | | | | | | |

**Tabelle 2**

| | | | | | | | | | | | | | |
|---|---|---|---|---|---|---|---|---|---|---|---|---|---|
| 2 | 2.1 | gefüllte Scheibe zur nächsten Station (Schwenktisch) befördern | Scheiben konstant spannen schwingungsfrei Beschädigungen der Scheibenoberflächel -Kante vermeiden | 0,5 mm planparallelität | 0,25 | | | | | | | | |
| | | | | | | | | | | | | | |
| | | | | | | | | | | | | | |
| | 2.2 | gefüllte Scheibe auf Schwenktisch ablegen | | | 0,08 | | | | | | | | |
| | 2.3 | gefüllte Scheibe von der Vertikalen in die Waagerechte bringen | | | 0,08 | | | | | | | | |
| | 2.4 | gefüllte Scheibe entspannen | schwingungsfrei Beschädigungen der Scheibenoberfläche/ -Kante vermeiden | | 0,07 | | | | | | | | |
| | 2.5 | auf Sortiertisch befördern | | | 0,08 | | | | | | | | |
| | 2.6 | Schwenktisch inkl. Spannvorrichtung in Ausgangsposition | schnellstmöglich | | | | | | | 0,12 | | | |

**Tabelle 3**

| | | | | | | | | | | | | | |
|---|---|---|---|---|---|---|---|---|---|---|---|---|---|
| 3 | 3.1 | gefüllte Scheibe einlagern | schwingungsfrei | | | 0,17 | | | | | | | |
| | 3.2 | Sortiertisch in Ausgangsposition | | | | | | | | | 0,13 | | |
| 4 | 4 | gefüllte Scheibe lagern zur Polymerisation | Permanente Wärmeableitung/ Regulierung Temperaturanstieg ca. 6°C | 20°C (+/-0,5°C) | | | 240 | | | | | | |
| | | | schwingungsfrei | | | | | | | | | | |
| | | | Scheibenanordnung "gestapelt" (Auslegung für max. Maße) | | | | | | | | | | |

**Tabelle 4**

| | | | | | | | | | | | | | |
|---|---|---|---|---|---|---|---|---|---|---|---|---|---|
| 5 | 5.1 | polymerisierte Scheibe auslagern | Beschädigungen der Scheibenoberfläche/ -Kante vermeiden | | | | | 0,17 | | | | | |
| | 5.2 | polymerisierte Scheibe zu Schwenktisch befördern | | | | | | 0,10 | | | | | |
| | 5.3 | polymerisierte Scheibe von Sortier tisch auf Schwenktisch befördern | | | | | | 0,07 | | | | | |
| | 5.4 | Sortiertisch in Ausgangsposition | | | | | | | | | | 0,13 | |
| 6 | 6.1 | Schwenktisch in Entnahme Position bringen | | | | | | | 0,07 | | | | |
| | 6.2 | Schwenktisch in Ausgangsposition | | | | | | | | | | | 0,13 |
| | 6.3 | Entnahme der Scheibe via Rollen, bzw Fördergurt | Belastbarkeit Rollen, bzw., Fördergut bzgl. scharfer Scheibenkanten + entsprechendem Scheibengewicht | | | | | | 0,17 | | | | |
| | Summe der Zeiten | | | | 23,03 | 0,17 | 240 | 0,33 | 0,23 | 0,12 | 0,13 | 0,13 | 0,13 |

### Bezugszeichenliste:

- 10: Brandschutzglas
- 12: erste Scheibe
- 14: zweite Scheibe
- 16: Abstandshalter
- 18: Abdichtung
- 20: Zwischenraum
- 22: Brandschutzmaterial
- 24: Brandschutzzusammensetzung
- 26: Rohling
- 28: C-Profil
- 30: Rahmenholme
- 32: Eckverbinder
- 34: Butylschnur
- 36: Thiokol/ Polysulfat-Masse
- 38: Hydrogel
- 40: A-Wagen
- 42: schräge Abstützfläche
- 44: untere Auflagefläche
- 46: längere Kante
- 48: kürzere Kante
- 50: Befüllstation
- 52: Vorrichtung
- 54: Fertigungslinie
- 56: Rohling-Anlieferungseinheit
- 58: Befülleinheit
- 60: Befüll- und Kippeinheit
- 62: Kippeinheit
- 64: Transporteinheit
- 66: Ruhelager
- 68: Befüllöffnung
- 70: Entlüftungsöffnung
- 72: Befülltülle
- 74: Entlüftungstülle
- 76: Einführrohr
- 78: flexibler Schlauch
- 80: Klemme
- 82: Grundplatte
- 84: Gegenlagerplatte
- 86: Druckplatte
- 88: Spanneinrichtung
- 90: erster Schwenktisch
- 92: erster Sortiertisch
- 94: zweiter Schwenktisch
- 96: Kran
- 98: Vertikalförderer
- 100: Füllkipptisch (mit oberen und unteren Fixierbalken, automatischer Transport)
- 102: Walzenförderer (mit Klappbahnteil, automatischer Transport)
- 104: Transportshuttle (automatisch, beidseitig ausfahrbar)
- 106: Aushärte-Lagerregal (z.B. 30 Plätze)
- 108: Sicherheitseinrichtung für automatisches Lagersystem
- 110: Walzenförderer (mit Klappbahnteil, automatischer Transport)
- 112: Abnahme-Kugelrollenkipptisch (manuell)
- 114: Bewegungsbahn
- 116: Rohlingsaufnahmeeinrichtung
- 118: Plattenbefestigungseinrichtung
- 120: Maschinenrahmen
- 124: untere Fördergurtbahn
- 126: Fördergurt
- 128: Rollen
- 130: Hilfsrahmen
- 132: Hubzylinder
- 134: erster Drehmechanismus
- 136: Wagen
- 138: Längsbahn
- 140: Hubmechanismus
- 142: zweiter Drehmechanismus

- S1: Befüllen
S1.1 Rohling (Scheibe) in Fülleinrichtung einführen, z.B. mittels Fördergurt, Rollen...
S1.2 Rohling über gesamte Fläche eben spannen
S1.3 gespannten Rohling schrägstellen
S1.4 Anschlüsse anbringen
S1.5 Füllen - dabei das Bauchen der Scheiben über den gesamten Füllprozess verhindern/unterdrücken
S1.6 Anschlüsse entfernen
S1.7 gefüllten Rohling aus schräger Position schwingungsarm/-frei wieder in waagerechte Position (Transportlage) bringen
- S2: Kippen (aus Transportlage in horizontale Lagerlage)
S2.1 gefüllten Rohling schwingungsarm/-frei im gespannten Zustand eine Station weiter zum vertikalstehenden Schwenktisch transportieren
S2.2 gefüllten Rohling schwingungsarm/-frei auf Schwenktisch ablegen
S2.3 gefüllten Rohling schwingungsarm/-frei im gespannten Zustand von vertikaler Position in horizontale Position (Spanneinrichtung und Schwenktisch)
S2.4 Rohling entspannen
S2.5 gefüllten Rohling von dem liegenden Schwenktisch auf den Sortiertisch befördern
S2.6 Schwenktisch inklusive Spanneinrichtung wieder in Ausgangsposition
- S3: Einlagern
S3.1 gefüllten Rohling schwingungsarm/-frei mittels Sortiertisch in den Puffer (Ruhelager), z.B. Pufferfächer von oben nach unten befüllen
S3.2 Sortiertisch wieder in Ausgangsposition
- S4: Polymerisieren
S4.1 gefüllten Rohling schwingungsarm/-frei im Puffer (Ruhelager) bei konstanter Temperatur von 20°C +/- 1°C lagern
S4.2 dabei kontinuierliche Wärmeabführung, um den durch chemischen Prozess erzeugten Temperaturanstieg von ca. 6°C zu kompensieren
- S5: Auslagern
S5.1 Polymerisiertes Brandschutzglas mittels zweitem Sortiertisch schwingungsarm/-frei auslagern
S5.2 Brandschutzglas mittels zweitem Sortiertisch zu horizontal liegendem zweiten Schwenktisch befördern
S5.3 Brandschutzglas von zweiten Sortiertisch auf zweiten Schwenktisch befördern
S5.4 zweiter Sortiertisch wieder in Ausgangsposition
- S6: Kippen in Transportlage
S6.1 zweiter Schwenktisch in vertikale Entnahmeposition bewegen
S6.2 Brandschutzglas von zweitem Schwenktisch entnehmen, z.B. mittels Fördergurt, Rollen...
S6.3 zweiter Schwenktisch wieder in Ausgangsposition

## Patentansprüche

1. Vorrichtung (52) zur Serienherstellung von Brandschutzgläsern (10), die jeweils eine erste Scheibe (12), eine mit der ersten Scheibe (12) mit Abstand verbundene zweite Scheibe (14) und polymerisiertes und/oder gelartiges Brandschutzmaterial (22) in einem Zwischenraum (20) zwischen der ersten (12) und der zweiten Scheibe (14) aufweisen, wobei die Vorrichtung (52) umfasst:
- eine Rohling-Anlieferungseinheit (56) zum Bereitstellen eines Rohlings (26), der die erste Scheibe (12) und die zweite Scheibe (14) aufweist, die mittels Befestigungsmitteln aneinander derart verbunden sind, dass ein Zwischenraum (20) zum Befüllen mit Brandschutzmaterial (22) vorgesehen ist,
- eine Befülleinheit (58) zum Befüllen des Rohlings (26) mit einer fließfähigen Brandschutzmaterialzusammensetzung (24), die zur Bildung des Brandschutzmaterials (22) durch im Zwischenraum (20) erfolgende Polymerisation und/oder Gelbildung fähig ist,
- eine Kippeinheit (62) zum Kippen des mit der Brandschutzmaterialzusammensetzung (24) befüllten Rohlings (26) in eine horizontale Lage,
- ein Ruhelager (66) zum Aufnehmen einer Mehrzahl der horizontal ausgerichteten befüllten Rohlinge (26) zwecks Durchführung der Polymerisation bzw. einer Gelbildung, um aus der Brandschutzmaterialzusammensetzung (24) das polymerisierte bzw. gelartige Brandschutzmaterial (22) zu bilden, und
- eine Transporteinheit (64) zum Transportieren des befüllten Rohlings (26) in das Ruhelager (66) und/oder zum Abtransport der mit dem Brandschutzmaterial (22) versehenen Brandschutzgläsern (10) aus dem Ruhelager (66) zur Weiterverarbeitung,
**gekennzeichnet durch** wenigstens eine erste Druckplatte (86) und wenigstens eine zweite Druckplatte (86) und wenigstens eine Plattenbefestigungseinrichtung (118), wobei die Vorrichtung (52) dazu ausgebildet ist, bei der Anlieferung **durch** die Anlieferungseinheit (56) pro Rohling (26) jeweils eine erste Druckplatte (86) auf die erste Scheibe (12) aufzusetzen und eine zweite Druckplatte (86) auf die zweite Scheibe (14) aufzusetzen und die Druckplatten (86) mit dem Rohling (26) dazwischen **durch** die Plattenbefestigungseinrichtung (118) relativ zueinander zu fixieren, um den Rohling (26) und das daraus gebildete Brandschutzglas (10) zumindest beim Füllen oder beim Füllen und Kippen handzuhaben.

2. Vorrichtung (52) nach Anspruch 1,
**gekennzeichnet durch**
eine Rohlingherstelleinheit, die dazu ausgebildet ist, Rohlinge (26) **durch** Verbinden der ersten (12) und der zweiten Scheibe (14) mit Zwischenraum (20) dazwischen und **durch** Abdichten des Zwischenraums (20) am gesamten Umfang des Rohlings (26) mit Ausnahme einer Befüllöffnung (68) und einer Belüftungsöffnung dazwischen, herzustellen.

3. Vorrichtung (52) nach Anspruch 2,
**dadurch gekennzeichnet,**
**dass** die Rohlingherstelleinheit so ausgebildet ist, dass der Rohling (26) mit der durch einen Befüllstutzen gebildeten Befüllöffnung (68) an einem ersten Eckbereich des Umfangs und der durch einen Belüftungsstutzen gebildeten Belüftungsöffnung an einem dem ersten Eckbereich diagonal gegenüberliegenden zweiten Eckbereich, herzustellen ist.

4. Vorrichtung (52) nach einem der voranstehenden Ansprüche,
**dadurch gekennzeichnet,**
**dass** die Befülleinheit (58) dazu ausgebildet ist, den Rohling (26) in einer Befülllage aufzunehmen, in der der Rohling (26) mit nach schräg unten gerichteter Befüllöffnung (68) zur Befüllung ausgerichtet ist.

5. Vorrichtung (52) nach einem der voranstehenden Ansprüche,
**dadurch gekennzeichnet,**
**dass** die Befülleinheit (58) zum Befüllen des Rohlings (26) mittels eines flexiblen, an der Befüllöffnung (68) anzuschließenden Schlauchs (78) ausgebildet ist, der nach Ende der Befüllung mittels einer Klemme (80) zum Verschließen des Zwischenraums (20) abklemmbar ist.

6. Vorrichtung (52) nach Anspruch 1 bis 5,
**dadurch gekennzeichnet,**
**dass** die Transporteinheit (64) dazu ausgebildet ist, eine durch die erste und die zweite Druckplatte (86) und die Plattenbefestigungseinrichtung (118) gebildete Rohlingsaufnahmeeinheit zur Handhabung und zum Transport des Rohlings (26) zumindest durch die Befülleinheit (58) und die Kippeinheit (62) hindurch zu transportieren und nach Abgabe des befüllten Rohlings (26) wieder zur Anlieferungseinheit (56) zu bewegen, um einen neuen Rohling (26) aufzunehmen.

7. Vorrichtung (52) nach einem der voranstehenden Ansprüche,
**dadurch gekennzeichnet,**
**dass** das Ruhelager (66) mehrere Fächer zum Aufnehmen der befüllten Rohlinge (26) aufweist, wobei die Transporteinheit (64) dazu ausgebildet ist, einen befüllten Rohling (26) automatisch in ein freies Fach einzulagern und zeitgesteuert nach Ablauf einer vorgegebenen Ruhezeit wieder aus dem Fach zur Weiterverarbeitung zu entnehmen.

8. Verfahren zur Herstellung von Brandschutzgläsern (10), die eine erste Scheibe (12), eine mit der ersten Scheibe (12) mit Abstand verbundene zweite Scheibe (14) und polymerisiertes und/oder gelartiges Brandschutzmaterial (22) in einem Zwischenraum (20) zwischen der ersten (12) und der zweiten Scheibe (14) aufweisen, umfassend die Schritte:
a) Bereitstellen eines Rohlings (26), der die erste Scheibe (12), die daran mit Abstand befestigte zweite Scheibe (14) und eine Abdichtung des zwischen den Scheiben (12, 14) gebildeten Zwischenraums (20) derart aufweist, dass eine Befüllöffnung (68) und eine Entlüftungsöffnung (70) frei gelassen ist, wobei der Rohling (26) zwischen zwei Druckplatten (86) aufgenommen wird und die Druckplatten (86) zum Einspannen des Rohlings (26) und zum Handhaben des Rohlings (26) relativ festgelegt werden, wobei der zwischen den zwei Druckplatten (86) eingespannte Rohling (26) zum Durchführen wenigstens eines, mehrerer oder aller der Schritte b), c), d) oder e) gehandhabt wird,
b) Befüllen des Zwischenraums (20) mit einer Brandschutzzusammensetzung (24), die dazu ausgebildet ist, durch Polymerisation und/oder Gelbildung innerhalb des Zwischenraums (20) das Brandschutzmaterial (22) zu bilden, wobei sich der Rohling (26) in einer Befülllage befindet,
c) Kippen des befüllten Rohlings (26) in eine horizontale Lage,
d) Einlagern des befüllten horizontal ausgerichteten Rohlings (26) in ein Ruhelager (66) zum Durchführen der Polymerisation und/oder der Gelbildung, um so das Brandschutzglas (10) zu bilden
e) Auslagern des Brandschutzglases (10) zur Weiterverarbeitung.

9. Verfahren nach Anspruch 8,
**dadurch gekennzeichnet,**
**dass** Schritt a) wenigstens einen, mehrere oder alle der folgenden Schritte umfasst:
a1) Befestigen der ersten Scheibe (12) unter Verwendung von Abstandshaltern (16) an der zweiten Scheibe (14),
a2) Abdichten eines Umfangs der aneinander befestigten ersten Scheibe (12) und zweiten Scheibe (14), um den Zwischenraum (20) abzudichten, vorzugsweise mit Ausnahme einer Befüllöffnung (68) und/oder einer Entlüftungsöffnung (70),
a3) Versehen eines Abstandshalters (16) in einem ersten Eckbereich des Umfangs des Rohlings (26) mit einer Befülltülle (72)
a4) Versehen eines Abstandshalters (16) in einem zweiten Eckbereich des Umfangs des Rohlings (26) mit einer Entlüftungstülle (74),
a5) Vorsehen wenigstens eines verschließbaren Befüll- oder Entlüftungsventils,
a6) Vorsehen der Befüllöffnung (68) und der Entlüftungsöffnung (70) an diametral gegenüberliegenden Eckbereichen,
a7) Verwenden von ESG-Scheiben als erste (12) und/oder zweite Scheibe (14),
a8) Verwenden eines C-Profils (28) als Abstandshalter (16),
a9) Anliefern des Rohlings (26) in einer Transportstellung, in der zwei gegenüberliegende Kanten horizontal ausgerichtet und die beiden verbleibenden Kanten schräg und vertikal ausgerichtet sind,

10. Verfahren nach Anspruch 8 oder 9,
**dadurch gekennzeichnet,**
**dass** Schritt b) wenigstens einen, mehrere oder alle der folgenden Schritte enthält:
b1) Ausrichten des Rohlings (26) in eine Befülllage mit der Befüllöffnung (68) an der tiefsten Stelle und der Entlüftungsöffnung (70) an der höchsten Stelle,
b2) Einfüllen einer zur Polymerisation und/oder Gelbildung zum Bilden eines Brandschutzmaterials (22) fähigen fließfähigen Brandschutzmaterialzusammensetzung (24),
b3) Entlüften des Zwischenraums (20) durch die Entlüftungsöffnung (70) beim Einfüllen der Brandschutzmaterialzusammensetzung (24),
b4) Verschließen der Einfüllöffnung,
b5) Verschließen der Entlüftungsöffnung (70),
b6) Ausrichten des befüllten Rohlings (26) in eine Transportstellung, in der zwei gegenüberliegende Kanten horizontal ausgerichtet und die beiden verbleibenden Kanten schräg und vertikal ausgerichtet sind,
b7) Einfüllen der Brandschutzmaterialzusammensetzung (24) durch einen in die Einfüllöffnung eingeführten flexiblen Schlauch (78),
b8) Entlüften durch einen in die Entlüftungsöffnung (70) eingeführten flexiblen Schlauch (78)
b9) Abklemmen des Schlauchs (78) von Schritt b7) und/oder b8) zwecks Verschließen der Befüllöffnung (68) bzw. der Entlüftungsöffnung (70).

11. Verfahren nach einem der voranstehenden Ansprüche,
**dadurch gekennzeichnet,**
**dass** Schritt d) umfasst:
d1) Einlagern des befüllten Rohlings (26) in ein horizontales Fach eines automatischen Lagersystems und
**dass** Schritt e) umfasst:
e1) Erfassen der Ruhezeit für jeden Rohling (26) und automatisches Auslagern des Rohlings (26) nach einer vorgegebenen Ruhezeit zur Weiterverarbeitung.

12. Verfahren nach einem der voranstehenden Ansprüche,
**dadurch gekennzeichnet,**
**dass** Schritt e) wenigstens einen, mehrere oder alle der folgenden Schritte umfasst:
e2) Entfernen einer Befüllungstülle (72) und/oder einer Entlüftungstülle (74),
e3) Versiegeln und/oder Abdichten der Befüllöffnung (68) und/oder der Entlüftungsöffnung (70),
e4) Weitertransport des fertig gestellten Brandschutzglases (10) zur Herstellung
e4.1) einer Brandschutzfestverglasung oder
e4.2) einer verglasten Brandschutztür.

13. Verfahren nach einem der voranstehenden Ansprüche,
**gekennzeichnet durch**:
f) Einspannen der angelieferten Rohlinge (26) zwischen eine erste und eine zweite Druckplatte (86) und relatives Fixieren oder Verspannen der Druckplatten (86) und Durchführen eines, mehrerer oder aller der Schritte b), c), d) und e) mit der so gebildeten Einheit aus Druckplatten (86) und Rohling (26) dazwischen.

14. Verfahren nach Anspruch 13
**gekennzeichnet durch** den Schritt:
g) Entfernen der Druckplatten (86) von dem Rohling (26) nach einem der Schritte b), c), d) oder e) und Rücktransport der Druckplatten (86) zu einer Anlieferungsstelle zwecks Aufnahme eines neuen Rohlings (26).

## Claims

1. Device for series production of fireproof glasses (10), each of which comprising a first pane (12), a second pane (14) connected to the first pane (12) at a distance, and polymerized and/or gel-like fireproof material (22) in a space (20) between the first (12) and second panes (14), wherein the device comprises:
- a blank delivery unit (56) for providing a blank (26) having the first pane (12) and the second panes (14), which panes are attached to each other by fixing means in such a manner that a space (20) for filling with fireproof material (22) is provided,
- a filling unit (58) for filling the blank (26) with a flowable fireproof material composition (24) capable of forming the fireproof material (22) by polymerization and/or gelation taking place in said space (20),
- a tilting unit (62) for tilting the blank (26) filled with said fireproof material composition (24) to a horizontal position,
- a rest device (66) for receiving a plurality of said horizontally oriented filled blanks (26) for the purpose of performing the polymerization or gelation to form the polymerized or gel-like fireproof material (22) from said fireproof material composition (24), and
- a transport unit (64) for transporting the filled blank (26) to the rest device (66) and/or for removing the fireproof glasses (10) provided with said fireproof material (22) from the rest device (66) for subsequent treatment
**characterized by** at least one first pressure plate (86) and at least one second pressure plate (86) and at least one plate fixing device (118), wherein the device (52) is configured for respectively placing a first pressure plate (88) onto the first pane (12) and a second pressure plate (86) onto the second pane (14) per blank at the delivery by the delivery unit (56) and to fix the pressure plates (86) with the blank (26) therebetween relative to each other using said plate fixing device (118), in order to handle the blank (26) and the fireproof glass (10) formed therefrom at least during filling or during filling and tilting.

2. Device (52) according to claim 1,
**characterized by**
a blank preparation unit configured to prepare blanks (26) by connecting the first (12) and second panes (14) with the space (20) therebetween and by sealing said space (20) at the entire periphery of the blank (26), with the exception of a filling opening (68) and a ventilation opening therebetween.

3. Device (52) according to claim 2,
**characterized in that**
the blank preparation unit is designed in such a way that the blank (26) is to be prepared with the filling opening (68) formed by a filling neck at a first corner area of the periphery and the ventilation opening formed by a ventilation neck at a second corner area diagonally opposite said first corner area.

4. Device (52) according to one of the preceding claims,
**characterized in that**
the filling unit (58) is designed for receiving the blank (26) in a filling position in which the blank (26) is oriented for filling with the filling opening (68) directed obliquely downwards.

5. Device (52) according to one of the preceding claims,
**characterized in that**
the filling unit (58) is designed for filling the blank (26) by means of a flexible tube (78) to be connected at the filling opening (68), which flexible tube can be clamped off by means of a clamp (80) for closing the space (20) after the filling is finished.

6. Device (52) according to claims 1 to 5,
**characterized in that**
the transport unit (64) is configured for transporting a blank receiving unit formed by the first and the second pressure plates (86) and the plate fixing device (118), for the handling and transportation of the blank (26) at least through the filling unit (58) and the tilting unit (62) and for moving the blank receiving unit back to the delivery unit (56) after delivery of the filled blank (26), in order to receive a fresh blank (26).

7. Device (52) according to one of the preceding claims,
**characterized in that**
the rest device (66) comprises several compartments for receiving the filled blanks (26), wherein the transport unit (64) is designed for automatically placing a filled blank (26) into a free compartment and for removing it again from said compartment in a time-controlled manner after the expiration of a predetermined rest period, for further processing.

8. Method for producing fireproof glasses (10), each of which comprising a first pane (12), a second pane (14) connected to the first pane (12) at a distance, and polymerized and/or gel-like fireproof material (22) in a space (20) between the first (12) and second panes (14), the method comprising the steps:
a) preparing a blank (26) having the first pane (12), the second pane (14) fixed to the first pane at a distance, and a sealing of the space (20) formed between the panes (12, 14) in such a manner that a filling opening (68) and a ventilation opening (70) are left free, wherein the blank (26) is received between two pressure plates and the pressure plates (86) are relatively fixed for clamping the blank (26) and for handling the blank (26), wherein the blank (26) clamped between said two pressure plates (86) is handled for performing at least one, several or all of the steps b), c), d) or e),
b) filling the space (20) with a fireproof composition (24) configured for forming the fireproof material (22) by polymerization and/or gelation within the space (20), wherein the blank (26) is in a filling position,
c) tilting the filled blank (26) to a horizontal position,
d) placing the filled, horizontally oriented blank (26) into a rest device (66) for performing the polymerization and/or gelation to thus form the fireproof glass (10),
e) removing the fireproof glass (10) for further processing.

9. Method according to claim 8,
**characterized in that** step a) at least comprises one, several or all of the following steps:
a1) fixing the first pane (12) to the second pane (14) using spacers (16),
a2) sealing a periphery of the mutually fixed first pane (12) and second pane (14) to seal the space (20), preferably with the exception of a filling opening (68) and/or a ventilation opening (70),
a3) providing a spacer (16) in a first corner area of the periphery of the blank (26) with a filling spout (72),
a4) providing a spacer (16) in a second corner area of the periphery of the blank (26) with a ventilation spout (74),
a5) providing at least one closable filling or ventilation valve,
a6) providing the filling opening (68) and the ventilation opening (70) at diametrically opposite corner areas,
a7) using ESG panes as a first (12) and/or second pane (14),
a8) using a C-profile (28) as a spacer (16),
a9) delivery of the blank (26) in a transport position in which two opposing edges are horizontally oriented and the two remaining edges are obliquely and vertically oriented.

10. Method according to claim 8 or 9,
**characterized in that**
step b) at least comprises one, several or all of the following steps:
b1) orienting the blank (26) in a filling position with the filling opening (68) at the lowest position and the ventilation opening (70) at the highest position,
b2) filling-in a flowable fireproof material composition (24) suitable for polymerization and/or gelation to form the fireproof material (22),
b3) ventilating the space (20) through the ventilation opening (70) during filling the fireproof material composition (24),
b4) closing the filling opening,
b5) closing the ventilation opening (70),
b6) orienting the filled blank (26) in a transport position in which two opposing edges are horizontally oriented and the remaining two edges are obliquely and vertically oriented,
b7) filling the fireproof material composition (24) through a flexible tube (78) inserted into the filling opening,
b8) ventilation through a flexible tube (78) inserted into the ventilation opening (70),
b9) clamping the tube (78) of step b7) and/or b8) for the purpose of closing the filling opening (68) or the ventilation opening (70).

11. Method according to one of the preceding claims,
**characterized in that**
step d) comprises:
d1) storing the filled blank (26) in a horizontal compartment of an automatic storage system, and
step e) comprises:
e1) detecting the rest period for each blank (26) and automatically removing the blank (26) for further processing after a predetermined rest period.

12. Method according to one of the preceding claims,
**characterized in that**,
step e) at least comprises one, several or all of the following steps:
e2) removing a filling spout (72) and/or a ventilation spout (74),
e3) sealing and/or packing-off the filling opening (68) and/or the ventilation opening (70),
e4) further transport of the finished fireproof glass (10) to the fabrication
e4.1) of a fireproof fixed glazing
e4.2) a glazed fire door.

13. Method according to one of the preceding claims,
**characterized by**:
f) clamping the delivered blanks (26) between a first and a second pressure plate (86) and relatively fixing or clamping said pressure plates (86) and peforming one, several or all of the steps b), c), d) and e) with the thus formed unit from pressure plates (86) and blank (26) therebetween.

14. Method according to claim 13,
**characterized by** the step :
g) removing the pressure plates (86) from the blank (26) after one of the steps b), c), d) or e) and returning the pressure plates (86) to a delivery post for receiving a fresh blank (26).

## Revendications

1. Dispositif (52) de fabrication en série de vitrages coupe-feu (10) comprenant chacun une première vitre (12), une deuxième vitre (14) reliée à distance à la première vitre (12), et de matériau coupe-feu (22) polymérisé et/ou de type gel dans un espace (20) situé entre la première vitre (12) et la deuxième vitre (14), ledit dispositif (52) comprenant:
- une unité de livraison d'ébauche (56) pour fournir une ébauche (26) comprenant la première vitre (12) et la deuxième vitre (14) reliées l'une à l'autre par l'intermédiaire de moyens de fixation et d'une manière à prévoir un espace (20) pour le remplissage avec le matériau coupe-feu (22),
- une unité de remplissage (58) pour remplir l'ébauche (26) avec une composition de matériaux coupe-feu (24) coulante capable de former le matériau coupe-feu (22) par polymérisation et/ou gélification effectués dans l'espace (20),
- une unité de basculement (62) pour basculer l'ébauche (26) remplie avec la composition de matériaux de coupe-feu (24) dans une position horizontale,
- un logement de repos (66) pour recevoir une pluralité d'ébauches (26) remplies orientées horizontalement en vue de la mise en oeuvre de la polymérisation et/ou gélification pour former le matériau coupe-feu (22) polymérisé ou de type gel à partir de la composition de matériaux coupe-feu (22), et
- une unité de transport (64) pour transporter l'ébauche (26) remplie vers le logement de repos (66) et/ou pour transporter les vitrages coupe-feu (10) munies du matériau coupe-feu (22) hors du logement de repos (66) pour le traitement ultérieur,
**caractérisé par** au moins une première plaque de pression (86) et au moins une deuxième plaque de pression (86) et au moins un dispositif de fixation de plaque (118), le dispositif (52) étant conçu pour respectivement placer une première plaque de pression (86) sur la première vitre (12) et une deuxième plaque de pression (86) sur la deuxième vitre (14) par ébauche lors de la livraison par l'unité de livraison (56), et pour fixer lesdites plaques de pression (86) l'une par rapport à l'autre par le dispositif de fixation de plaque (118) avec l'ébauche intercalée pour manipuler l'ébauche (26) et les vitrages coupe-feu (10) ainsi formées au moins pendant le remplissage ou pendant le remplissage et basculement.

2. Dispositif (52) selon la revendication 1,
**caractérisé par**
une unité de préparation d'ébauche conçue pour préparer des ébauches (26) en reliant la première (12) et deuxième vitres (14) espacées par l'espace (20) et scellant l'espace (20) sur toute la circonférence de l'ébauche (26), à l'exception d'un orifice de remplissage (68) et d'un orifice d'aération entre eux.

3. Dispositif (52) selon la revendication 2,
**caractérisé en ce que**
l'unité de préparation d'ébauche est conçue de manière à préparer l'ébauche avec l'orifice de remplissage (68) formé par un raccord de remplissage se situant sur une première zone de coin de la circonférence et avec l'orifice d'aération formé par un raccord d'aération se situant sur une deuxième zone de coin diagonalement opposée à la première zone de coin.

4. Dispositif (52) selon l'une quelconque des revendications précédentes, **caractérisé en ce que**
l'unité de remplissage (58) est conçue de manière à loger l'ébauche (26) dans une installation de remplissage dans laquelle l'ébauche (26) est orientée avec son orifice de remplissage dirigé obliquement vers le bas pour le remplissage.

5. Dispositif (52) selon l'une quelconque des revendications précédentes, **caractérisé en ce que**
l'unité de remplissage (58) est conçue pour remplir l'ébauche (26) an moyen d'un tuyau flexible (78) destiné à être raccordé à l'orifice de remplissage (68) et à être obturé au moyen d'une pince (80) pour sceller l'espace (20) après la fin du remplissage.

6. Dispositif (52) selon la revendication 1 à 5,
**caractérisé en ce que**
l'unité de transport (64) est conçue pour transporter une unité de logement d'ébauche formée par la première et la deuxième plaque de pression (86) et le dispositif de fixation de plaque (118) et destinée au manipulation et transport de l'ébauche (26) au moins à travers ladite unité de remplissage (58) et ladite unité de basculement (62) et, après la délivrance de l'ébauche (26) remplie, retourner l'unité de logement d'ébauche vers l'unité de livraison (56), pour recevoir une nouvelle ébauche (26).

7. Dispositif (52) selon l'une quelconque des revendications précédentes, **caractérisé en ce que**
le logement de repos (66) comporte plusieurs compartiments pour loger les ébauches (26) remplies, l'unité de transport (64) étant conçue pour loger automatiquement une ébauche (26) remplie dans un compartiment libre et prélever celle-ci dudit compartiment de manière temporisée après l'expiration d'un repos prédéterminé, pour le traitement ultérieur.

8. Procédé de fabrication de vitrages coupe-feu (10) comprenant une première vitre (12), une deuxième vitre (14) reliée à distance à la première vitre (12), et de matériau coupe-feu (22) polymérisé et/ou de type gel dans un espace (20) situé entre la première vitre (12) et la deuxième vitre (14), le procédé comprenant les étapes:
a) fournir une ébauche (26) comportant la première vitre (12), la deuxième vitre (14) y fixée avec un écart et le scellement de l'espace (20) formé entre les vitres (12, 14) de sorte à laisser libre un orifice de remplissage (68) et un orifice d'aération (70), l'ébauche (26) étant reçue entre deux plaques de pression (86), et les plaques de pression (86), pour serrer l'ébauche (26) et pour manipuler l'ébauche (26), étant fixées l'une par rapport à l'autre, l'ébauche (26) serrée entre les deux plaques de pression (86) étant manipulée pour exécuter au moins une, plusieurs ou toutes les étapes b), c), d) ou e),
b) remplir l'espace (20) avec une composition de matériaux coupe-feu (24) conçue pour former le matériau coupe-feu (22) par polymérisation et/ou gélification dans l'espace (20), l'ébauche (26) se situant dans une position de remplissage,
c) basculer l'ébauche (26) remplie dans une position horizontale,
d) loger l'ébauche (26) remplie orientée horizontalement dans un logement de repos (66) pour effectuer la polymérisation et/ou gélification et ainsi former le vitrage coupe-feu (10),
e) déloger le vitrage coupe-feu (10) pour son traitement ultérieur.

9. Procédé selon la revendication 8,
**caractérisé en ce que**
l'étape a) au moins comprend une, plusieurs ou toutes les étapes suivantes:
a1) fixer la première vitre (12) sur la deuxième vitre (14) en utilisant des écarteurs (16),
a2) sceller une circonférence de la première vitre (12) et deuxième vitre (14) fixées l'une à l'autre, pour sceller l'espace (20), de préférence à l'exception d'un orifice de remplissage (68) et/ou d'un orifice d'aération (70),
a3) munir un écarteur (16) dans une première zone de coin de la circonférence de l'ébauche (26) d'un bec de remplissage (72),
a4) munir un écarteur (16) dans une deuxième zone de coin de la circonférence de l'ébauche (26) d'un bec d'aération (74),
a5) prévoir au moins une soupape de remplissage ou d'aération obturable,
a6) prévoir l'orifice de remplissage (68) et l'orifice d'aération (70) aux zones de coin diamétralement opposées,
a7) utiliser des vitres ESG comme la première (12) et/ou deuxième vitre (14),
a8) utiliser un profilé en C (28) comme écarteur (16),
a9) livrer l'ébauche (26) dans une position de transport dans laquelle deux bords opposés sont orientés horizontalement et les deux bords restants sont orientés obliquement et verticalement.

10. Procédé selon la revendication 8 ou 9,
**caractérisé en ce que**
l'étape b) comprend au moins une, plusieurs ou toutes les étapes suivantes:
b1) orienter l'ébauche (26) dans une position de remplissage avec l'orifice de remplissage (68) se situant au point le plus bas et l'orifice d'aération (70) se situant au point le plus haut,
b2) remplir une composition de matériaux coupe-feu (24) coulante capable de polymérisation et/ou gélification pour former un matériau coupe-feu (22),
b3) aérer l'espace (20) à travers l'orifice d'aération (70) lors du remplissage de la composition de matériaux coupe-feux (24),
b4) sceller l'orifice de remplissage,
b5) sceller l'orifice d'aération (70),
b6) orienter l'ébauche (26) remplie dans une position de transport dans laquelle deux bords opposés sont orientés horizontalement et les deux bords restants sont orientés obliquement et verticalement,
b7) remplir la composition de matériaux coupe-feu (24) à travers un tuyau flexible (78) inséré dans l'orifice de remplissage,
b8) aération à travers un tuyau flexible (78) inséré dans l'orifice d'aération (70),
b9) obturer le tuyau (78) de l'étape b7) et/ou b8) en vue de fermer l'orifice de remplissage (68) ou l'orifice d'aération (70).

11. Procédé selon l'une quelconque des revendications précédentes, **caractérisé en ce que**
l'étape d) comprend:
d1) loger l'ébauche (26) dans un compartiment horizontal d'un système de logement automatique, et
l'étape e) comprend:
e1) détecter le repos pour chaque ébauche (26) et délogement automatique de l'ébauche (26) après un repos prédéterminé, pour le traitement ultérieur.

12. Procédé selon l'une quelconque des revendications précédentes, **caractérisé en ce que**
l'étape e) comprend au moins une, plusieurs ou toutes les étapes suivantes:
e2) enlever le bec de remplissage (72) et/ou le bec d'aération (74)
e3) rendre étanche et/ou sceller l'orifice de remplissage (68) et/ou de l'orifice d'aération (70),
e4) transport ultérieur du vitrage coupe-feu (10) fini pour la fabrication
e4.1) d'un vitrage coupe-feu fixe ou
e4.2) d'une porte coupe-feu avec vantail vitré.

13. Procédé selon l'une quelconque des revendications précédentes, **caractérisé par**:
f) serrer les ébauches (26) livrées entre une première et deuxième plaque de pression (86) et fixer et serrer les plaques de pression (86) l'une par rapport à l'autre, et exécuter une, plusieurs ou toutes les étapes b), c), d) et e) avec l'unité ainsi formée à partir des plaques de pression (86) et de l'ébauche (26) entre celles-ci.

14. Procédé selon la revendication 13,
**caractérisé par** l'étape:
g) enlever les plaques de pression (86) de l'ébauche (26) après l'une des étapes b), c), d) ou e) et retourner les plaques de pression (86) à une poste de livraison en vue de recevoir une nouvelle ébauche (26).
